# EUROPEAN PATENT SPECIFICATION

(11) **EP 1 975 203 B1**
(45) Date of publication and mention of the grant of the patent: **03.03.2010**
(21) Application number: 07290398.2
(22) Date of filing: 30.03.2007
(51) Int. Cl.: C09B 29/32, C09B 29/42, C09B 45/34, C09B 67/22, G11B 7/24, C09B 69/02

(54) **Alkynyl aniline based azo dyes, and their use with nionic azo metal complex dyes**
Azofarbstoffe auf Alkynyl-Anilin-Basis und ihre Verwendung mit anionischen metallhaltigen Azokomplexfarbstoffen
Colorants azoïques à base d'alkynylaniline et leur utilisation avec des colorants complexes métallo-azo-anioniques

(43) Date of publication of application: 01.10.2008
(73) Proprietor: Clariant Finance (BVI) Limited, Road Town, Tortola (VG)
(72) Inventor: Lücke, Lars, 65719 Hofheim am Taunus (DE); Winter, Martin Alexander, 79400 Kandern (DE); Graciet, Jean-Christophe, 68128 Village-Neuf (FR); Klein, Cédric, 67170 Brumath (FR)
(74) Representative: Mikulecky, Klaus

(56) References cited:
- WO-A-2006/106110
- T.G.SHISHMAKOVA ET AL.: "Synthesis and Study of Antimicrobial Action of Amino Derivatives of 4-Hydroxy-4'-Ethynylazobenzene" BULL.ACAD.SCI.USSR DIV.CHEM.SCI., vol. 21, 1972, pages 943-945, XP009090605
- D.KUCIAUSKAS ET AL.: "Ultrafast degenerate Four Wave Mixing Studies of Third-Order Nonlinearities in conjugated organic Polymers containing Azo Groups and Alkynyl Linkages in the Polymer Backbone" J.PHYS.CHEM.B, vol. 107, 2003, pages 1559-1566, XP002454228
- Q.LI ET AL.: "Synthesis of well-defined Tower-Shaped 1,3,5-Trisubstituted Adamantanes incorporating a Macrocyclic Trilactam Ring System" J.ORG.CHEM., vol. 69, 2004, pages 1010-1019, XP002454229

## Description

The present invention relates to alkynyl aniline azo based dyes and/or of azo metal complex dyes made thereof and their use, and to compositions comprising alkynyl aniline azo based dyes and anionic azo metal complex dyes with cationic basic yellow dyes and their use, in optical layers, preferably for optical data recording using a laser with a wavelength up to 450 nm.

The invention further relates to a write once read many (WORM) type optical data recording medium capable of recording and reproducing information with radiation of blue laser, which employs alkynyl aniline azo based dye and/or an azo metal complex dye made thereof, or a composition comprising a alkynyl aniline azo based dye and a anionic azo metal complex dye with a cationic basic yellow dye in the optical layer.

Recently, organic dyes have attracted considerable attentions in the field of diode-laser optical data storage. WORM type optical data recording media like commercial recordable compact discs (CD-R) and recordable digital versatile discs (DVD-R) can contain in the recording layer dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, enhancement of photosensitivity, low thermal conductivity as well as light and thermal stabilities, durability for storage or non-toxicity. Important criteria are also good read-out stability, which means high number of cycles at a given intensity of laser-light, and sufficient solubilities of the dyes in the organic solvents generally applied in the spin coating process.

At the recorded region of such an organic dye type optical data recording medium, the optical properties have been changed not only by a change in the optical characteristics and a decrease in the layer thickness resulting from the thermal decomposition of the dye, but also by a deformation of the substrate.

This recording principle is the same for CD-R and DVD-R, the difference remaining the spot size and the wavelength of the laser light used. CD-R are writable at a wavelength of from 770 to 830 nm and DVD-R, by using more recent compact high-performance red diode lasers, at a wavelength from 600 to 700 nm achieving then a 6- to 8 fold improvement in data packing density in comparison with conventional CDs.

However, considering factors such as the recent spread of electronic networks (e.g. Internet) and the emergence of high definition television (HDTV) broadcasting, inexpensive and convenient recording media, capable of recording image information at even larger capacity, are required. While DVD-R's sufficiently serve as high-capacity recording media at present, demand for larger capacity and higher density has increased.

Blu-ray^{®} discs (Blu-ray^{®} disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) or HD-DVD discs (a standard developed by Toshiba and NEC) are going to be the next milestone in optical data recording technology. By these new specifications the data storage may be increased up to 27 Gigabytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

The construction of such optical data recording media is known in the art. The optical recording medium comprises preferably a substrate with a guide groove for laser beam tracking, a recording layer, this recording layer also being called optical layer or dye layer in the following text, containing an organic dye as the main component, a reflective layer and a protective layer. When recording/readout is carried out through the substrate, a transparent substrate is employed. As such a transparent substrate, one made of a resin such as polycarbonate, polymethacrylate or amorphous polyolefin, one made of glass or one having a resin layer made of radiation curable resin, i.e. photopolymerizable resin, formed on glass, may, for example, be employed. Advanced optical data recording media may comprise further layers, such as protective layers, adhesive layers or even additional optical recording layers.

For blue diode-laser optical data storage a variety of dye compounds has been proposed in the literature.

WO 2006/106110 A discloses anionic azo metal complex dyes with cationic basic yellow dyes as counterion.

Alkynyl aniline azo based dyes are known from Journal of Physical Chemistry B, 2005, Vol. 109, No. 46, 21496 - 21498.

Unfortunately the dye compounds described so far still show disadvantages which impede their satisfactory use as dyes for optical data storage.

There is a still a need for an optical data recording medium that is capable of recording data at high density with improved recording characteristics and with improved read-out stabilities, also for the recording at speeds exceeding 1X, i.e. for 2X speed and 4X speed recording, therefore a need for an optical data recording medium with improved recording characteristics.

Surprisingly the object was achieved by using alkynyl aniline azo based dyes and/or azo metal complex dyes made thereof, and by compositions comprising alkynyl aniline azo based dyes as described below.

In the following text, "halogen" represents F, Cl, Br or I, preferably F, Cl or Br, more preferably F or Cl, even more preferably Cl, if not otherwise stated; "alkyl" represents linear and branched alkyl; and "alkoxy" represents linear and branched alkoxy; any alkyl and cycloalkyl groups being unsubstituted, partially or completely substituted by halogen; if not otherwise stated.

Subject of the invention is a compound of formula (I), 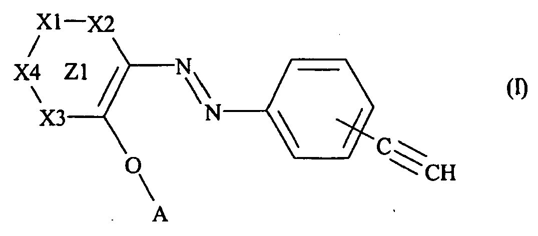 wherein the residue
- A: represents H or a group of formula (II); 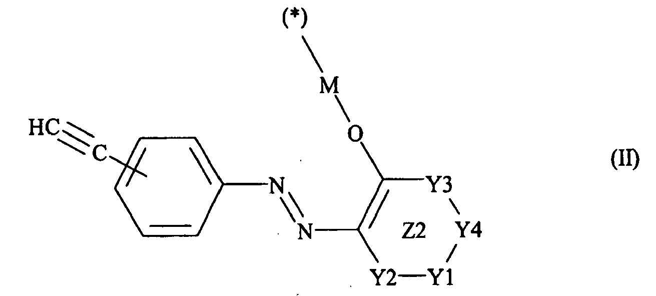
- M: represents a divalent metal atom, preferably selected from main groups 1, 2, 3, 4 or 5 or from transition groups 1 or 2 or 4, 5, 6, 7 or 8 of the Periodic Table of the Chemical Elements;
- (*): in formula (II) denotes the bond of the divalent metal atom M to the O atom in formula (I);
- X1, X2, X3, X4, Y1, Y2, Y3 and Y4: are same or different and independently from each other selected from the group consisting of the divalent endocyclic groups C(R4R5), N(R6), O, S, C=N-R7, C=O and C=S and the trivalent endocyclic groups C(R4) and N;
- R4 and R5: are same or different and independently from each other selected from the group consisting of H, CN, CF₃, halogen, NO₂, OH, SH, SO₂-NR²¹R²², CO-R³⁰, SO₂R³⁰, CO-NR²¹R²²,
C₁₋₁₀ alkyl, C₃₋₁₀ cycloalkyl, the C₁₋₁₀ alkyl and the C₃₋₁₀ cycloalkyl being independently from each other unsubstituted or substituted by 1 to 4 same or different substituents, the substituents being independently from each other selected from the group consisting of C₁₋₁₀ alkyl, halogen, OH, C₆₋₁₂ aryl and NR²¹R²²,
C₆-C₁₂ aryl the C₆₋₁₂ aryl being unsubstituted or substituted by 1 to 4 same or different substituents, the substituents being independently from each other selected from the group consisting of C₁₋₁₀ alkyl, C₃₋₁₀ cycloalkyl, OH, NO₂, CN, halogen, CF₃, C₆₋₁₂ aryl, C₁₋₁₀ alkoxy and NR²¹R²²,
OC₁₋₁₀ alkyl, NR²¹R²² and SC₁₋₁₀ alkyl;
- R6 and R7: are same or different and independently from each other selected from the group consisting of H, NR²¹R²²,
C₁₋₁₀ alkyl, C₃₋₁₀ cycloalkyl, the C₁₋₁₀ alkyl and the C₃₋₁₀ cycloalkyl being independently from each other unsubstituted or substituted by 1 to 4 same or different substituents, the substituents being independently from each other selected from the group consisting of C₁₋₁₀ alkyl, halogen, OH, C₆₋₁₂ aryl or NR²¹R²²,
C₆₋₁₂ aryl, C₁₋₆ alkyl-C₆₋₁₂ aryl, the C₆₋₁₂ aryl and the C₁₋₆ alkyl-C₆₋₁₂ aryl being independently from each other unsubstituted or substituted by 1 to 4 same or different substituents, the substituents being independently from each other selected from the group consisting of C₁₋₁₀ alkyl, C₃₋₁₀ cycloalkyl, OH, NO₂, CN, halogen, CF₃, C₆₋₁₂ aryl, C₁₋₁₀ alkoxy and NR²¹R²²;
- the R²¹ and R²²: residues are same or different and independently from each other selected from the group consisting of H, C₁₋₁₀ alkyl, C₆₋₁₂ aryl and C₁₋₁₂ alkyl-NR²³R²⁴;
- the R²³ and R²⁴: residues are same or different and independently from each other selected from the group consisting of H, C₁₋₁₀ alkyl and C₆₋₁₂ aryl;
- the R³⁰ Z1: residues are same or different and independently from each other selected from the group consisting of OH, C₁₋₆ alkyl, C₆₋₁₀ aryl and O-C₁₋₆ alkyl; formula (I) and Z2 in formula (II) being unsaturated or aromatic cycles.

Formulae (I) and (II) also include all possible tautomeric forms.

Preferably,
- M: is a divalent metal atom selected from the group consisting of Mg, Ca, Sr, Ba, Mn, Cu, Ni, Co, Zn and Fe;
- X1, X2, X3, X4, Y1, Y2, Y3 and Y4: are same or different and independently from each other selected from the group consisting of the divalent endocyclic groups C(R4R5), N(R6), C=O and C=S and the trivalent endocyclic groups C(R4) and N;
- R4 and R5: are same or different and independently from each other selected from the group consisting of H, CN, CF₃, F, Cl, Br, OH, CO-R³⁰,
C₁₋₁₀ alkyl, the C₁₋₁₀ alkyl being unsubstituted or substituted by 1 to 4 same or different substituents, the substituents being independently from each other selected from the group consisting of C₁₋₁₀ alkyl, F, Cl, Br, OH, phenyl and NR²¹R²²,
phenyl, the phenyl being unsubstituted or substituted by 1 to 4 same or different substituents, the substituents being independently from each other selected from the group consisting of C₁₋₁₀ alkyl, OH, NO₂, CN, F, Cl, Br, CF₃, phenyl, C₁₋₁₀ alkoxy and NR²¹R²², OC₁₋₁₀alkyl and NR²¹R²²;
- R6: is selected from the group consisting of H, NR²¹R²²,
C₁₋₁₀ alkyl, C₃₋₆ cycloalkyl, the C₁₋₁₀ alkyl and the C₃₋₆ cycloalkyl being independently from each other unsubstituted or substituted by 1 to 4 same or different substituents, the substituents being independently from each other selected from the group consisting of C₁₋₁₀ alkyl, F, Cl, Br, OH, phenyl or NR²¹R²²,
phenyl, C₁₋₆ alkyl-C₆₋₁₂ aryl, the phenyl and the C₁₋₆ alkyl-C₆₋₁₂ aryl being independently from each other unsubstituted or substituted by 1 to 4 same or different substituents, the substituents being independently from each other selected from the group consisting of C₁₋₁₀ alkyl, C₃₋₆ cycloalkyl, OH, NO₂, CN, F, Cl, Br, CF₃, phenyl, C₁₋₁₀ alkoxy and NR²¹R²²;
- the R²¹ and R²²: residues are same or different and independently from each other selected from the group consisting of H, C₁₋₁₀ alkyl, phenyl and C₁₋₁₂ alkyl-NR²³R²⁴;
- the R²³ and: R²⁴ residues are same or different and independently from each other selected from the group consisting of H, C₁₋₁₀ alkyl and phenyl;
- the R³⁰: residues are same or different and independently from each other selected from the group consisting of OH, C₁₋₆ alkyl, phenyl and O-C₁₋₆ alkyl.

More preferably,
- M: is a divalent metal atom selected from the group consisting of Mn, Cu, Ni, Co, Zn and Fe;
- X1, X2, X3, X4, Y1, Y2, Y3 and Y4: are same or different and independently from each other selected from the group consisting of the divalent endocyclic groups C(R4R5), N(R6), C=O and C=S and the trivalent endocyclic group C(R4);
- R4 and R5: are same or different and independently from each other selected from the group consisting of H, CN, CF₃, F, CI, OH, CO-R³⁰,
C₁₋₆ alkyl, the C₁₋₆ alkyl being unsubstituted or substituted by 1 to 4 same or different substituents, the substituents being independently from each other selected from the group consisting of C₁₋₆ alkyl, F, OH, phenyl and NR²¹R²²,
phenyl, the phenyl being unsubstituted or substituted by 1 to 4 same or different substituents, the substituents being independently from each other selected from the group consisting of C₁₋₆ alkyl, OH, NO₂, F, Cl, CF₃, C₁₋₆ alkoxy and NR²¹R²²,
OC₁₋₆ alkyl and NR²¹R²²;
- R6: is selected from the group consisting of H, NR²¹R²²,
C₁₋₆ alkyl, C₃₋₆ cycloalkyl, the C₁₋₆ alkyl and the C₃₋₆ cycloalkyl being independently from each other unsubstituted or substituted by 1 to 4 same or different substituents, the substituents being independently from each other selected from the group consisting of C₁₋₆ alkyl, F, OH, phenyl or NR²¹R²²,
phenyl, C₁₋₆ alkyl-phenyl, the phenyl and the C₁₋₆ alkyl-phenyl being independently from each other unsubstituted or substituted by 1 to 4 same or different substituents, the substituents being independently from each other selected from the group consisting of C₁₋₆ alkyl, C₃₋₆ cycloalkyl, OH, NO₂, F, Cl, CF₃, C₁₋₆ alkoxy and NR²¹R²²;
- the R²¹ and R²²: residues are same or different and independently from each other selected from the group consisting of H, C₁₋₆ alkyl, phenyl and C₁₋₆ alkyl-NR²³R²⁴;
- the R²³ and R²⁴: residues are same or different and independently from each other selected from the group consisting of H, C₁₋₆ alkyl and phenyl;
- the R³⁰: residues are same or different and independently from each other selected from the group consisting of OH, C₁₋₆ alkyl, phenyl and O-C₁₋₆ alkyl.

Even more preferably,
- M: is a divalent metal atom selected from the group consisting of Cu, Ni and Co;
- X1, X2, X3, X4, Y1, Y2, Y3 and Y4: are same or different and independently from each other selected from the group consisting of the divalent endocyclic groups C(R4R5), N(R6), C=O and C=S and the trivalent endocyclic group C(R4);
- R4 and R5: are same or different and independently from each other selected from the group consisting of H, CN, OH, CO-R³⁰,
methyl, ethyl, n-propyl, iso-propyl, n-butyl, sec-butyl, tert-butyl, these alkyl resdues being unsubstituted or substituted by 1, 2 or 3 same or different substituents, the substituents being independently from each other selected from the group consisting of phenyl and NR²¹R²²,
phenyl, the phenyl being unsubstituted or substituted by 1 or 2 same or different substituents, the substituents being independently from each other selected from the group consisting of methyl, ethyl, n-propyl, iso-propyl, n-butyl, sec-butyl, tert-butyl, OH, NO₂, F, Cl, CF₃, methoxy, ethoxy and NR²¹R²²,
methoxy and NR²¹R²²;
- R6: is selected from the group consisting of H, NR²¹R²²,
methyl, ethyl, n-propyl, iso-propyl, n-butyl, sec-butyl, tert-butyl, cyclopropyl, cyclopentyl, cyclohexyl, these alkyl residues and these cycloalkyl residues being independently from each other unsubstituted or substituted by 1, 2 or 3 same or different substituents, the substituents being independently from each other selected from the group consisting of phenyl or NR²¹R²²,
phenyl, benzyl, the phenyl and the benzyl being independently from each other unsubstituted or substituted by 1 or 2 same or different substituents, the substituents being independently from each other selected from the group consisting of methyl, ethyl, n-propyl, iso-propyl, n-butyl, sec-butyl, tert-butyl, OH, NO₂, F, Cl, CF₃, methoxy, ethoxy and NR²¹R²²;
- the R²¹ and R²²: residues are same or different and independently from each other selected from the group consisting of H, methyl, ethyl, n-propyl, iso-propyl, n-butyl, sec-butyl, tert-butyl, phenyl and C₂₋₃ alkyl-NR²³R²⁴;
- the R²³ and R²⁴: residues are same or different and independently from each other selected from the group consisting of H, methyl, ethyl, n-propyl, iso-propyl, n-butyl, sec-butyl, tert-butyl and phenyl;
- the R³⁰: residues are same or different and independently from each other selected from the group consisting of OH, methyl, ethyl, n-propyl, iso-propyl, phenyl and O-C₁₋₄ alkyl.

Especially,
- M: is a divalent metal atom selected from the group consisting of Cu, Ni and Co;
- X1, X2, X3, X4, Y1, Y2, Y3 and Y4: are same or different and independently from each other selected from the group consisting of the divalent endocyclic groups C(R4R5), N(R6), C=O and C=S and the trivalent endocyclic group C(R4);
- R4 and R5: are same or different and independently from each other selected from the group consisting of H, CN, OH, CO-R³⁰, methyl, ethyl, n-butyl and NR²¹R²²;
- R6: is selected from the group consisting of H, NR²¹R²², methyl, ethyl, n-butyl and phenyl;
- the R²¹ and R²²: residues are same or different and independently from each other selected from the group consisting of H and phenyl;
- the R³⁰: residues are same or different and independently from each other selected from the group consisting of methoxy and ethoxy.

More especially, the compounds of formula (I) are selected from the group consisting of compounds of formulae (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34), (35), (36), (37), (38), (39), (40), (41), (42), (43) and (44); even more especially of formulae (17) and (22).

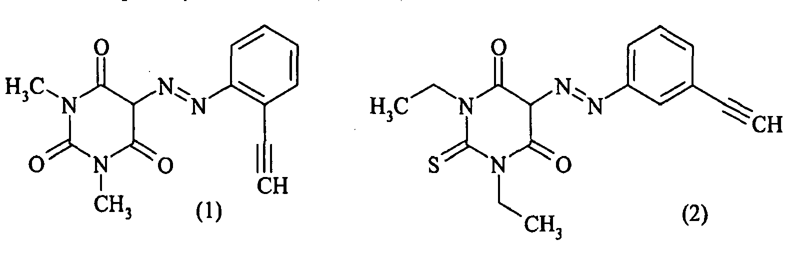

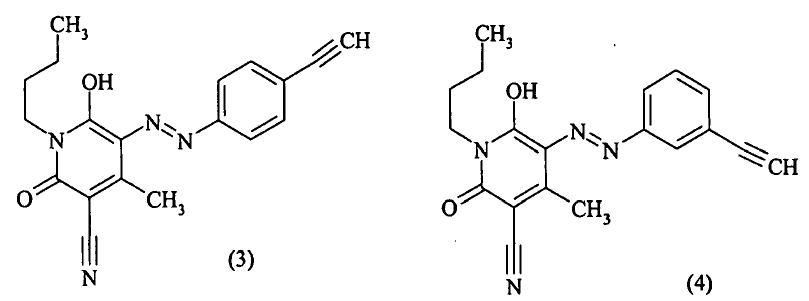

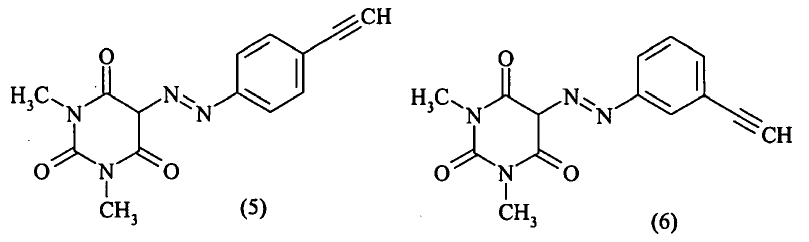

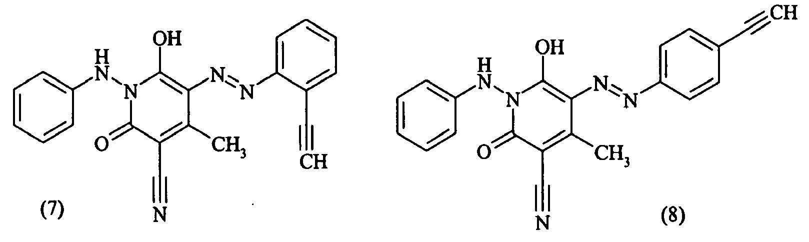

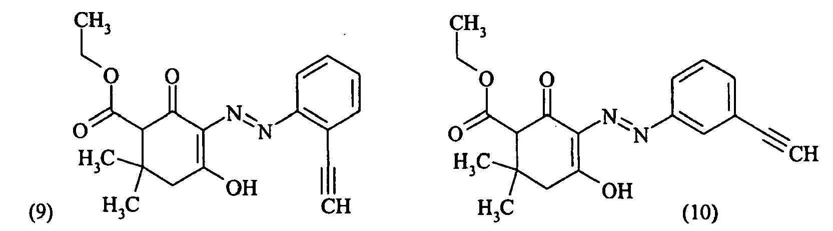

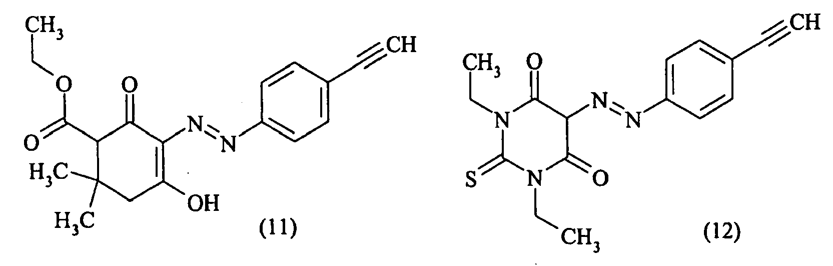

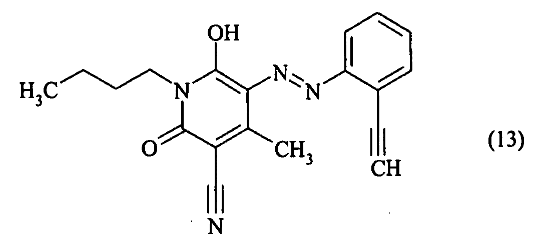

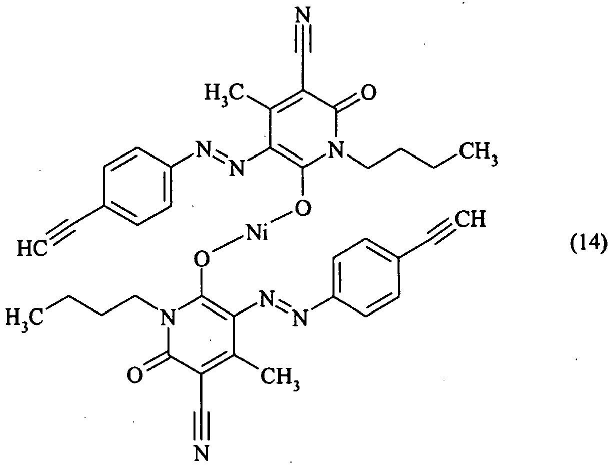

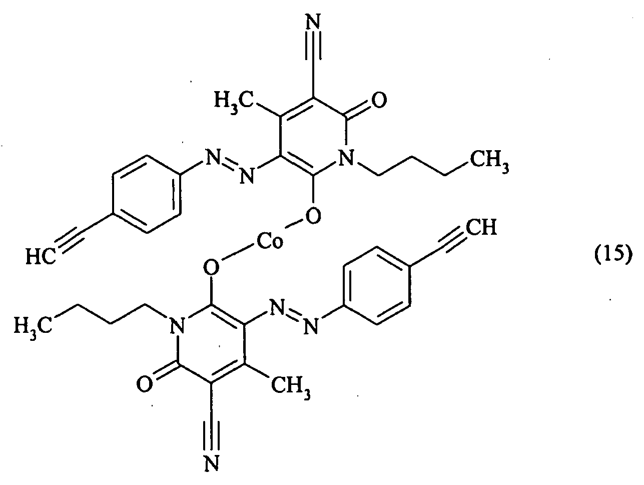

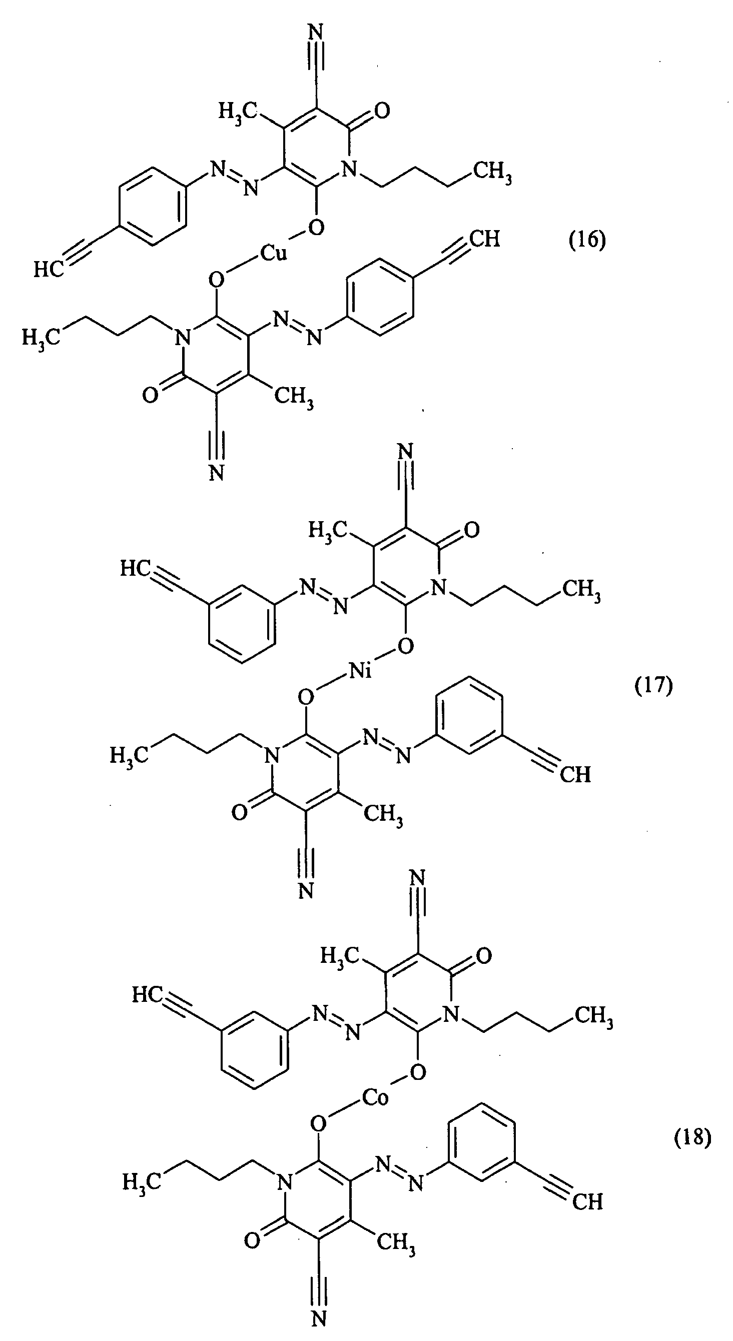

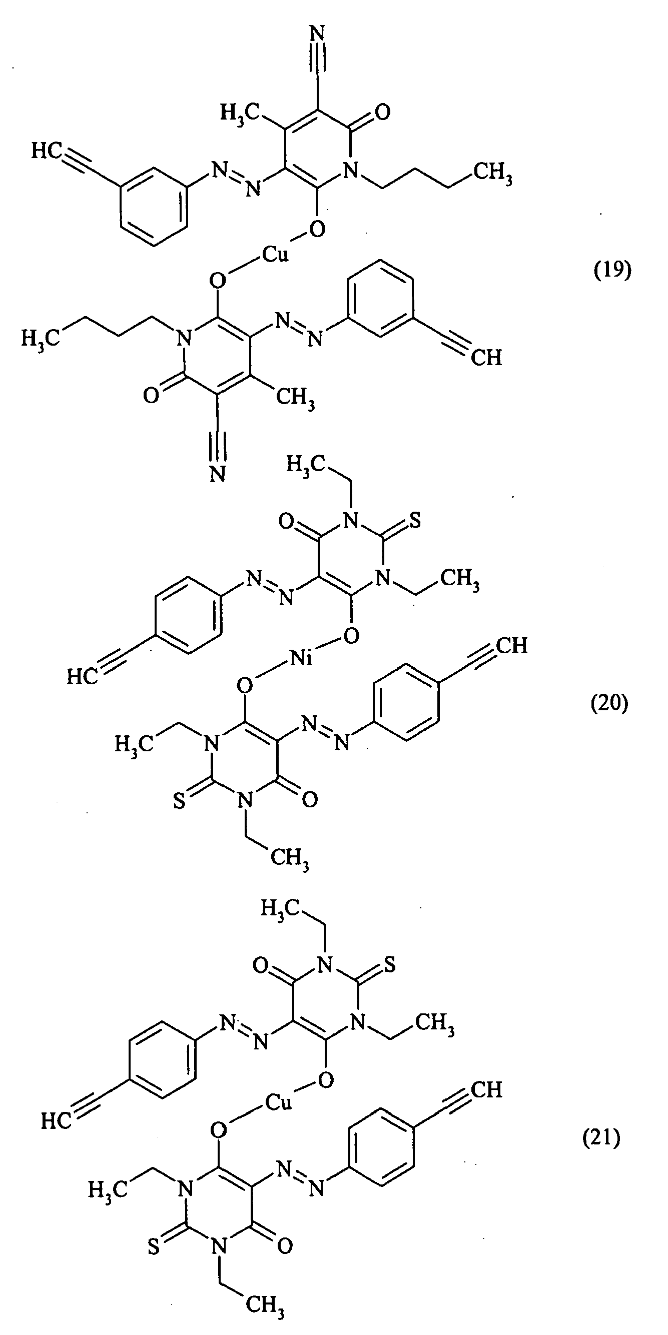

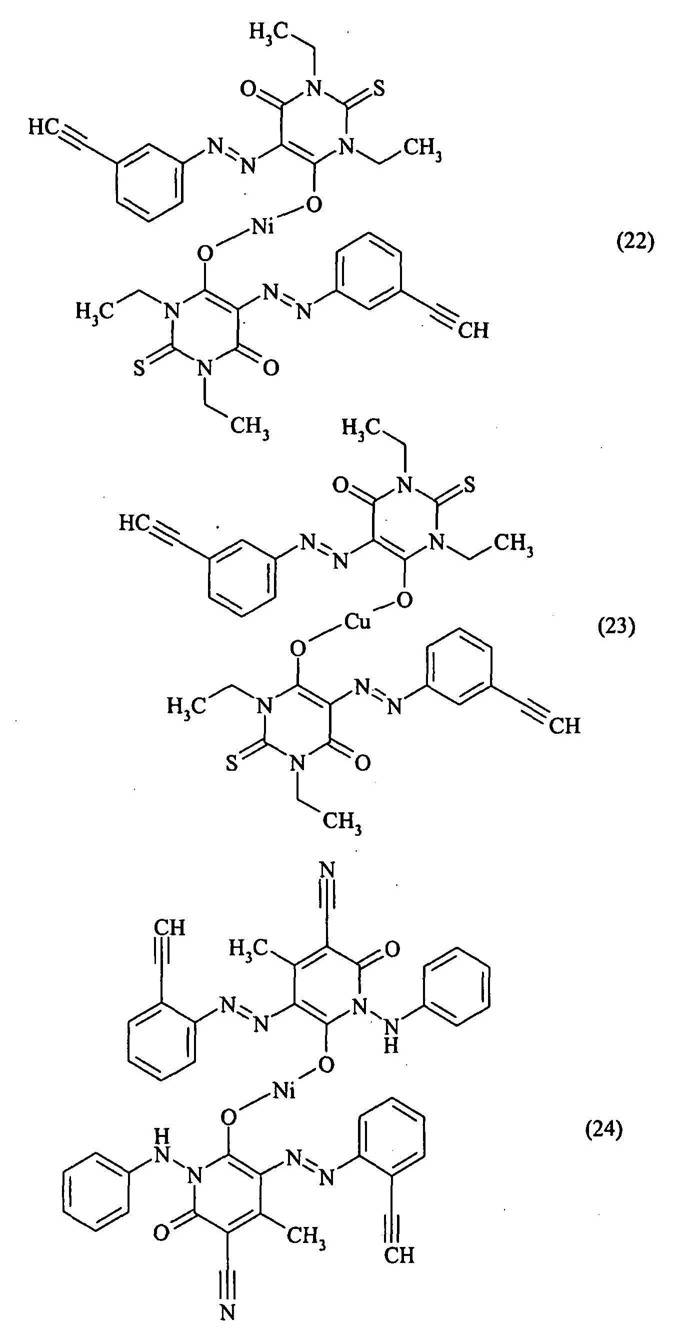

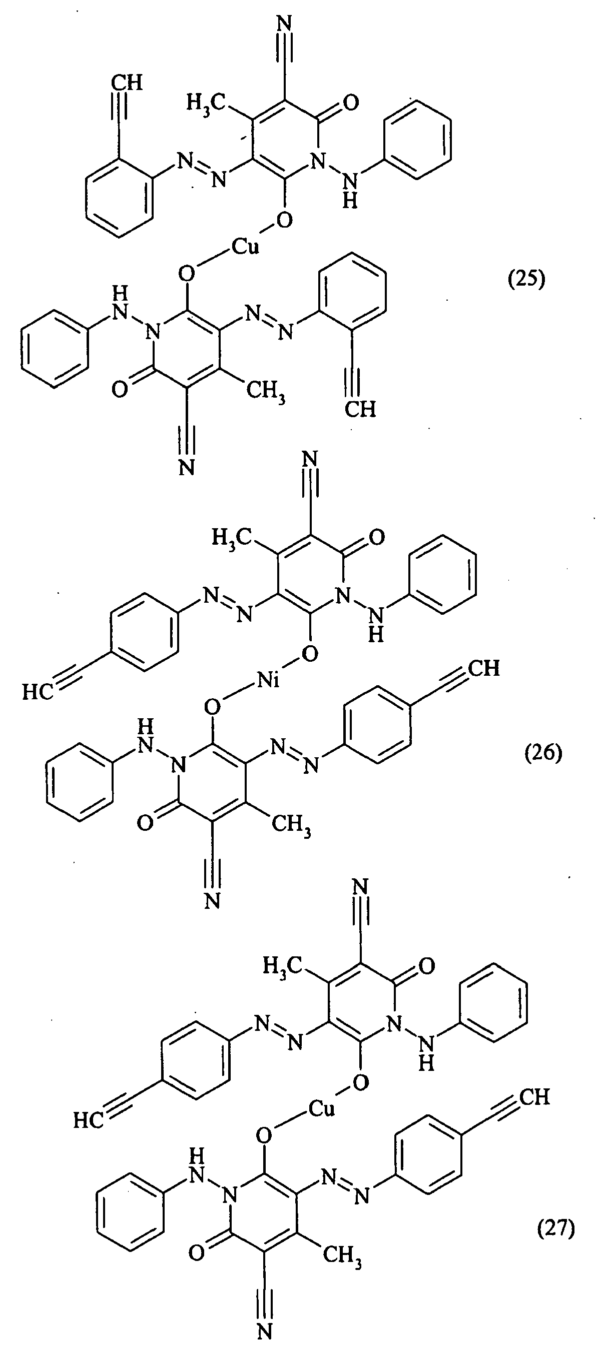

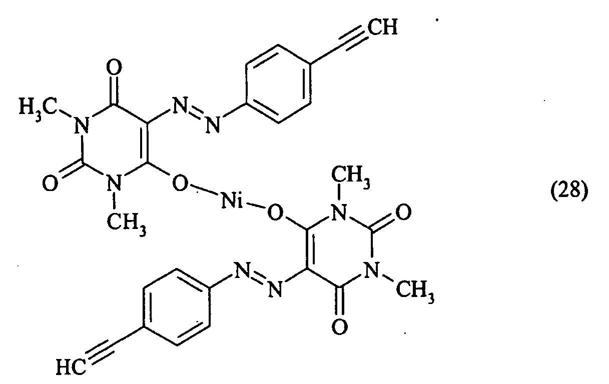

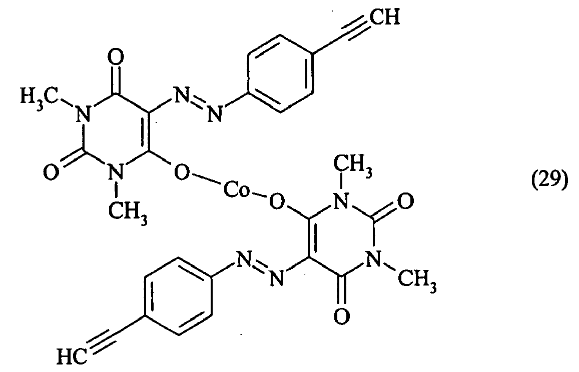

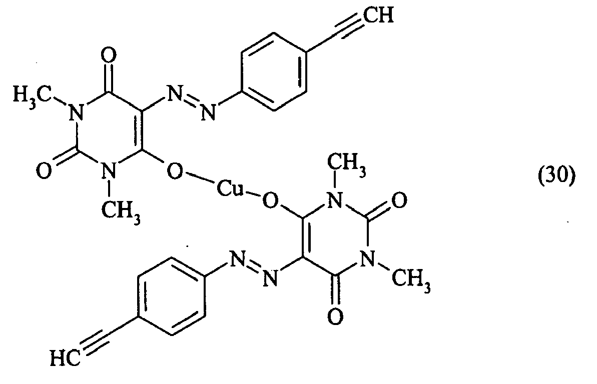

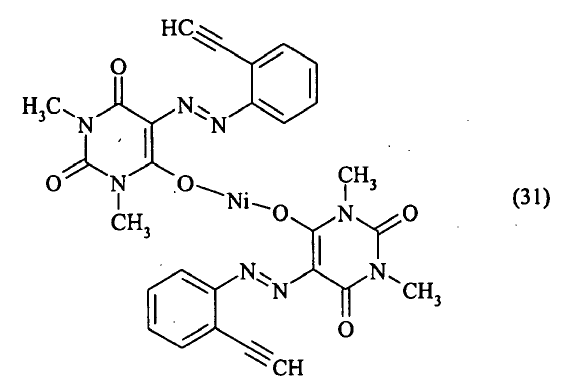

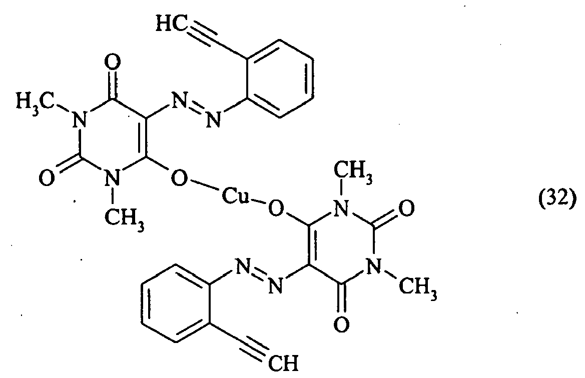

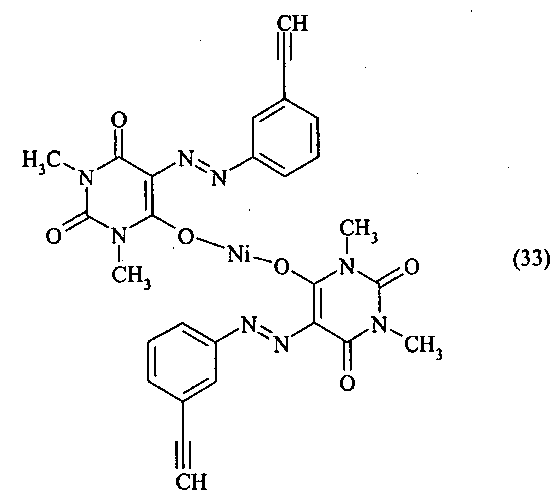

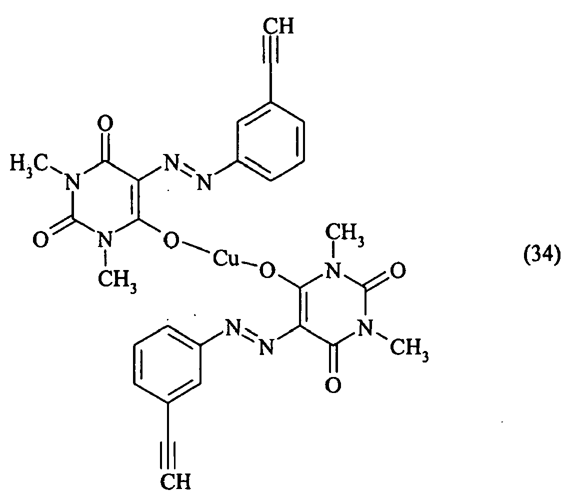

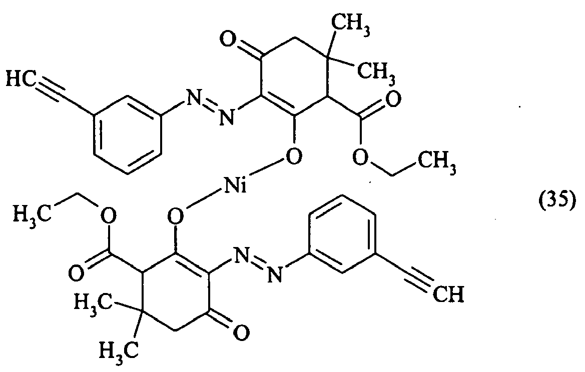

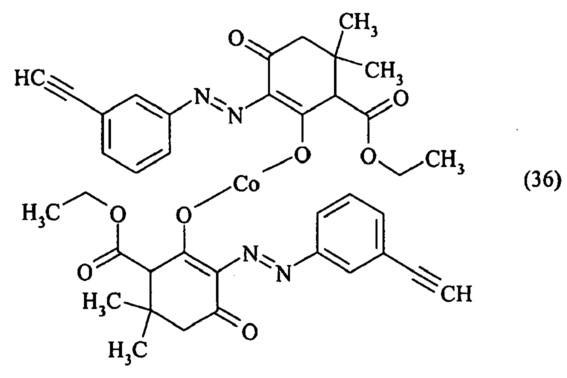

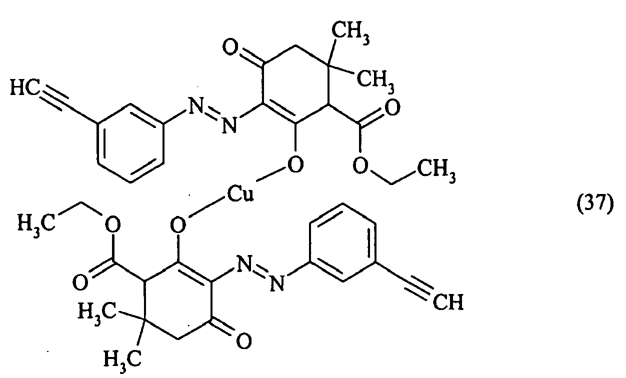

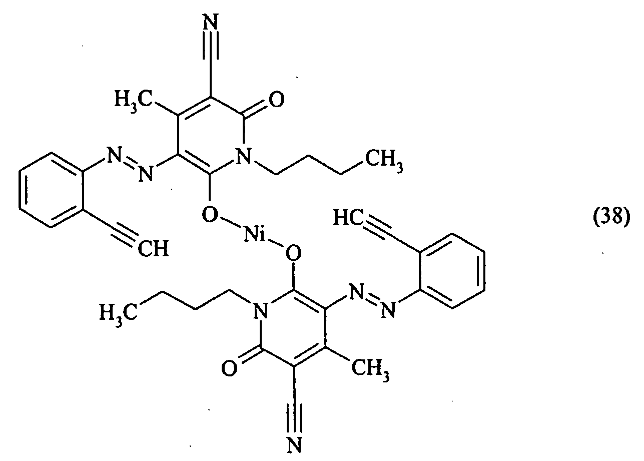

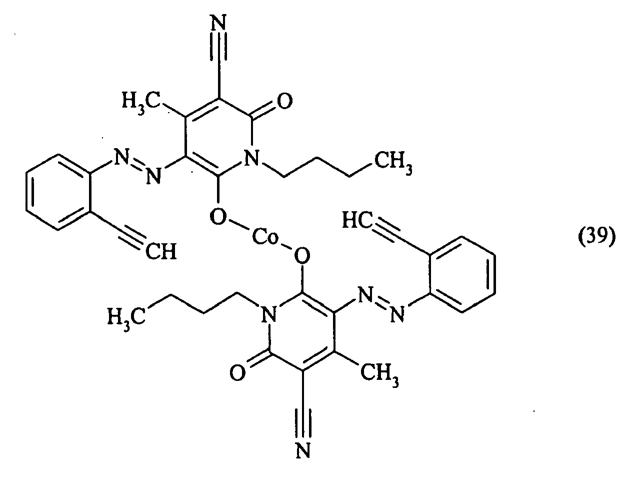

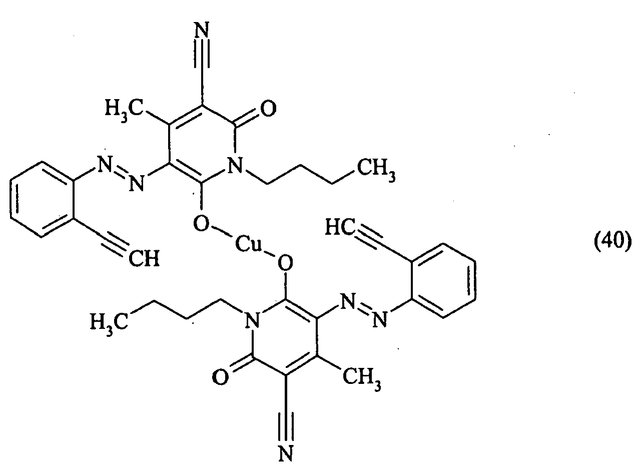

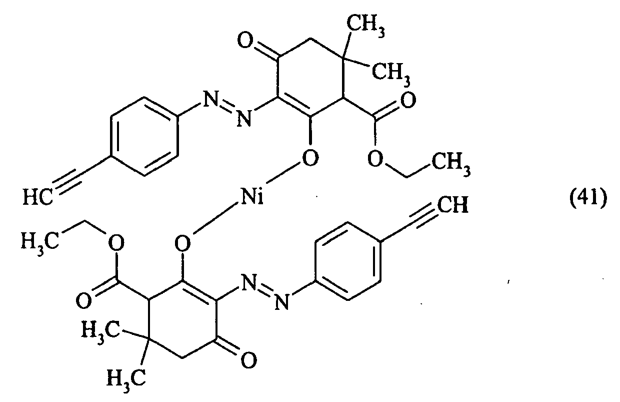

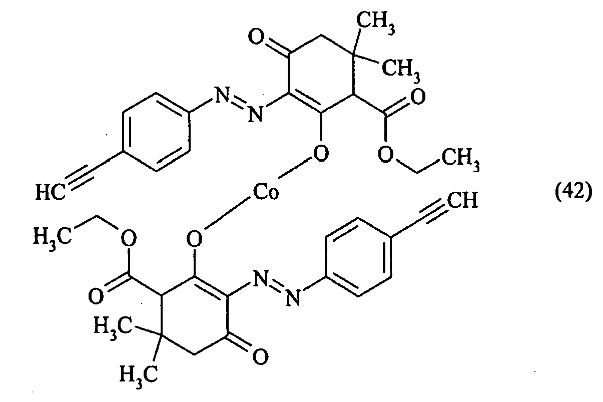

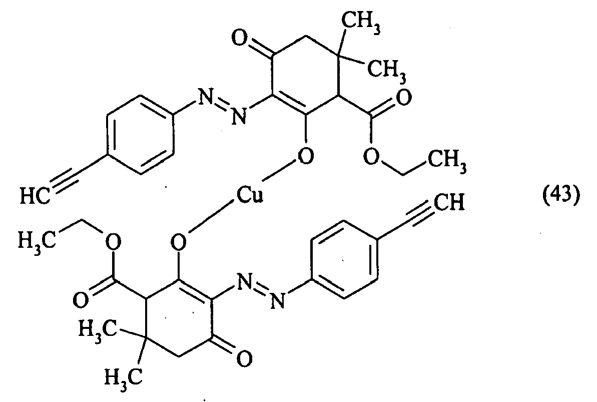

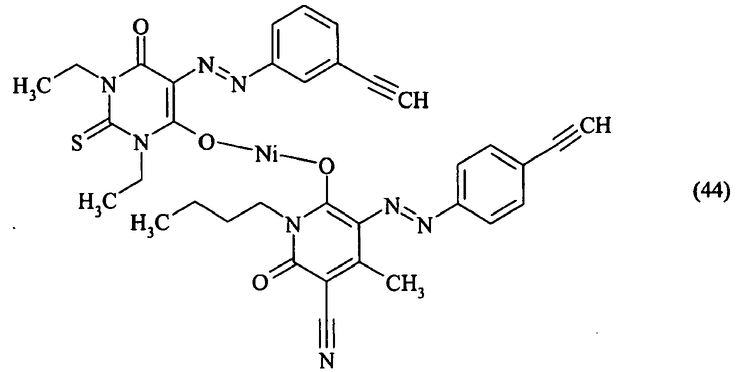

In the formulae (35), (36), (37), (41), (42) and (43), the respective coupling agent, as described in the sections "Preparation of the compounds of formula (I) with A being H" and "Preparation of the compounds of formula (I) with A being a group of formula (II)" below, from which the compounds of formulae (35), (36), (37), (41), (42) and (43) are derived, is the compound of formula (Ia*), which is a tautomeric form of one specific embodiment of the compound of formula (Ia) below.

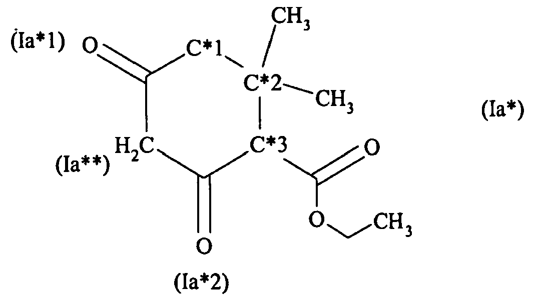

The compound of formula (Ia*) shows asymmetric substitution on the three diastereomeric C atoms C*1, C*2 and C*3 with respect to the two endocyclic keto groups (Ia*1) and (Ia*2) and the connecting endocyclic C atom (Ia**). Therefore, each of the O atoms of the two endocyclic keto groups (Ia*1) and (Ia*2) can be connected to the complexing metal atom M in the formula (I) with A in formula (I) being a group of formula (II), resulting in three possible structures: two symmetric and one asymmetric compound of formula (I). These three possible structures are exemplified with the formulae (43), (43a) and (43b). Therefore, in terms of this disclosure, the formula (I) with A in formula (I) being a group of formula (II), in case that a coupling agent is used having such an asymmetric substitution as described in case of the compound of formula (Ia*) and more than one endocyclic keto group, which can be connected to the metal atom M in the complex, and particularly the formulae (35), (36), (37), (41), (42) and (43), encompass also these corresponding constitutional equivalents; and the respective compounds of formula (I) with A being a group of formula (II) can also be a mixture of these respective constitutional equivalents.

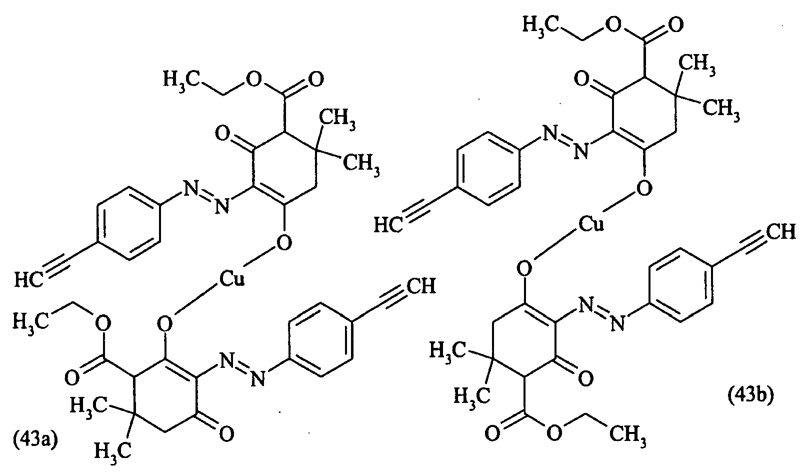

Further, in terms of this disclosure, the formula (Ia*), the formula (Ia) below and the formula (I), with A being H or a group of formula (II), in case that one or more endocyclic or exocyclic diastereomeric atoms such as C*3 occur, particularly the formulae (9), (10), (11), (35), (36), (37), (41), (42) and (43), encompass all possible stereoisomers with respect to the possible configurations of the one or more diastereomeric atoms in these formulae; and compounds of formula (Ia*), of the respective formula (Ia) or of the respective formula (I) with A being H or a group of formula (II) can also be a mixture of these respective stereoisomers.

### Preparation of the compounds of formula (I) with A being H

In the following, the compounds of formula (I) with A in formula (I) being H are called azo ligands. Subject of the invention is also a process for the preparation of the compound of formula (I) with A being H, also in all its preferred aspects as described above, especially of the compounds of formula (1), (2), (3), (4), (5), (6), (7), (8), (9), (10), (11), (12) or (13), preferably by an azo coupling reaction of the respective compound of formula (Ia), also called coupling agent, with the respective compound of formula (Ib), also called diazo component; the compound of formula (Ib) being preferably prepared by diazotization reaction of the respective compound of formula (Ic), also called amine compound; 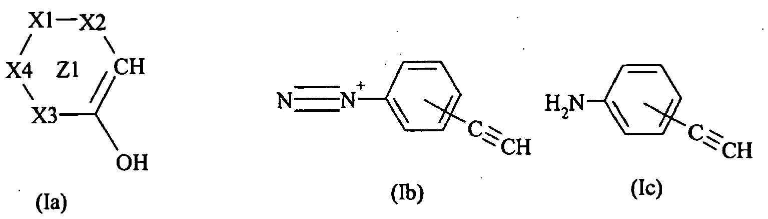 wherein X1, X2, X3, X4 and Z1 have the same meaning as described above, also with all their preferred embodiments.

The diazo component has preferably chloride Cl- as counter ion, since the diazotization reaction of the amine compound preferably is done in aqueous hydrochloride acid.

The amine compounds and the coupling agents are known substances and can be prepared according to or in analogy to known procedures.

It is possible to use more than one amine component and/or more than one coupling agent resulting in the respective mixture of the azo ligands.

The azo coupling reaction is carried out in water, non-aqueous solvents and in mixtures thereof. Non-aqueous solvents are preferably selected from the group consisting of alcohols, more preferably methanol, ethanol, propanol, butanol, pentanol, dipolar aprotic solvents, preferably dimethylformamide (DMF), DMSO, dimethylacetamide or N-methyl-pyrrolidinone (NMP) and pyridine, and water-immiscible solvents, preferably toluene or chlorobenzene. More preferably the azo coupling reaction is carried out in water.

The azo coupling reaction is preferably carried out with a stoichiometric ratio of coupling component and diazo component. The azo coupling reaction is generally done at a temperature of from -30°C to 100°C, preference being given to temperatures of-10°C to 30°C, and particular preference to temperatures of -5°C to 20°C.

The azo coupling reaction may be carried out in an acidic as well as an alkaline medium. Preference is given to pH < 10, particular preference to pH 3 to 9.

Preferably the azo ligand is isolated following standard methods, in case of a precipitate preferably by filtration followed preferably by drying.

### Preparation of the compounds of formula (I) with A being a group of formula (II)

Subject of the invention is also a process for the preparation of the compound of formula (I) with A in formula (I) being a group of formula (II), also in all its preferred aspects as described above, preferably by a complexing reaction of a divalent metal salt with a compound of formula (I) with A in formula (I) being H; particularly the compounds of formulae (14), (15), (16), (17), (18), (19), (20), (21), (22), (23), (24), (25), (26), (27), (28), (29), (30), (31), (32), (33), (34), (35), (36), (37), (38), (39), (40), (41), (42), (43) or (44) are prepared by a complexing reaction of a respective metal salt with the respective compounds of formulae (1), (2), (3), (4), (5), (6), (7), (8), (9), (10), (11), (12) and/or (13).

It is possible to use more than one, preferably 1, 2 or 3, more preferably 1 or 2, metal salts. It is possible also to use more than one, preferably 1, 2, 3, 4, 5 or 6, more preferably of 1, 2, 3 or 4, even more preferably of 1 or 2, compound of formula (I) with A being H, i.e. to use more than one azo ligand, and a combination of these measures is also possible, resulting in homo- and/or heteroleptic complexes. Preferably, only one metal salt and only one azo ligand is used, resulting in homoleptic complexes. Preferably, the total amount of metal salt is used in the required stoichiometric amount with regard to the total amount of azo ligand, i.e. the ratio is preferably one equivalent of metal salt to two equivalents of azo ligand.

The azo ligand can be added to the metal salt or vice versa.

The complexing reaction can be carried out in suspension or in solution, preferably in solution. The metal salt is being used preferably in form of a solution. Preferably the azo ligand is present as a solution in the complexing reaction.

The solvent, that is preferably used in the complexing reaction, is water, a non-aqueous solvent or a mixture thereof. The non-aqueous solvent is preferably selected from the group consisting of C₁₋₈ alcohols, nitriles, preferably acetonitrile, ketones, preferably acetone, aromatic solvents, preferably toluene or chlorobenzene, and dipolar aprotic solvents, preferably DMF, DMSO, NMP, pyridine and mixtures thereof.
More preferred solvents are C₁₋₈ alcohols, especially ethanol, acetonitrile and pyridine.

It is also possible to add the metal salt already at an earlier stage of the synthesis of the azo ligand or their precursors, preferably before, during or after the azo coupling reaction, more preferably after the azo coupling reaction to the resulting suspension or solution of the azo ligand.

Even more preferably the azo ligand is isolated and dried after synthesis, and the complexing reaction is carried out in a separate step.

The complexing reaction is preferably done at a temperature of from 0°C to 200°C, more preferably of from 5°C to 170°C, even more preferably of from 20°C to 150°C, especially the complexing reaction is carried out under reflux at the reflux temperature of the solvent system used and at atmospheric pressure.

Preferably the compound of formula (I) with A being a group of formula (II) is isolated following standard methods, usually the compound of formula (I) with A being a group of formula (II) form a precipitate which is isolated, preferably by filtration, and preferably followed by drying.

The divalent metal salt is preferably selected from the main groups 1, 2, 3, 4 or 5 or from the transition groups 1 or 2 or 4, 5, 6, 7 or 8 of the Periodic Table of the Chemical Elements; more preferably, the divalent metal salt is derived from a metal selected from the group consisting of Mg, Ca, Sr, Ba, Mn, Cu, Ni, Co, Zn, and Fe, even more preferably of Mn, Cu, Ni, Co, Zn and Fe, especially of Cu, Ni, and Co. Salts of the divalent metal are preferably sulfates, halides, perchlorates, acetates or the respective hydrates thereof; the halides being preferably fluorides, chlorides, bromides or iodides, more preferably chlorides or bromides, especially chlorides.
More preferred metal salts are cobalt-, nickel- or copper-sulfate; cobalt-, nickel- or copper-halide, preferably -chloride; cobalt-, nickel- or copper-acetate, and their respective hydrates; nickel- or copper-perchlorate, and their respective hydrates, especially the metal salt is selected from the group consisting of Cu(SO₄)₂, Cu(SO₄)₂*5 H₂O, CuCl₂, Cu(ClO₄)₂* 6H₂O, Ni(OAc)₂, Ni(OAc)₂*4 H₂O, Co(OAc)₂*4 H₂O, Cu(OAc)₂*4 H₂O, NiCl₂*6 H₂O, Ni(ClO₄)₂*6H₂O, Cu(ClO₄)₂*6H₂O, Co(SO₄)₂ and CoSO₄*7H₂O; preferably from the group consisting of Ni(OAc)₂*4 H₂O, Co(OAc)₂*4 H₂O, Cu(OAc)₂*4 H₂O, Ni(ClO₄)₂*6H₂O, Cu(ClO₄)₂*6H₂O, Cu(SO₄)₂*5 H₂O, CuCl₂, Co(SO₄)₂ and CoSO₄*7H₂O, more preferably from Ni(OAc)₂*4 H₂O, Co(OAc)₂*4 H₂O, Cu(OAc)₂*4 H₂O, Ni(ClO₄)₂*6H₂O, Cu(ClO₄)₂*6H₂O, CoSO₄*7H₂O and Cu(SO₄)₂*5 H₂O especially from Ni(OAc)₂*4 H₂O, Co(OAc)₂*4 H₂O Cu(OAc)₂*4 H₂O, Ni(ClO₄)₂*6H₂O, Cu(ClO₄)₂*6H₂O.

A further subject of the invention is the use of a compound of formula (I) with A in formula (I) being H, also in all its preferred embodiments, especially of a compound of formula (1), (2), (3), (4), (5), (6), (7), (8), (9), (10), (11), (12) or (13), as a ligand, preferably as a ligand in azo metal complex dyes.
A further subject of the invention is the use of a compound of formula (I), the use of a compound of formula (I) in all the preferred aspects of the formula (I) as described above, and more preferably the use of a compound of formula (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34), (35), (36), (37), (38), (39), (40), (41), (42), (43) or (44), in an optical layer, preferably in an optical layer for optical data recording.
A further subject of the invention is the use of a compound of formula (I), the use of a compound of formula (I) in all the preferred aspects of the formula (I) as described above, and more preferably the use of a compound of formula (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34), (35), (36), (37), (38), (39), (40), (41), (42), (43) or (44), as a dye in an optical layer, preferably in an optical layer for optical data recording.

Further subject of the invention is a composition (C) comprising a component (A) and a component (B), wherein
the component (A) being a compound of formula (I);
and
the component (B) is a compound of formula (X), the compound (X) consisting of a anionic compound of formula (XA) and a cation Cat+; 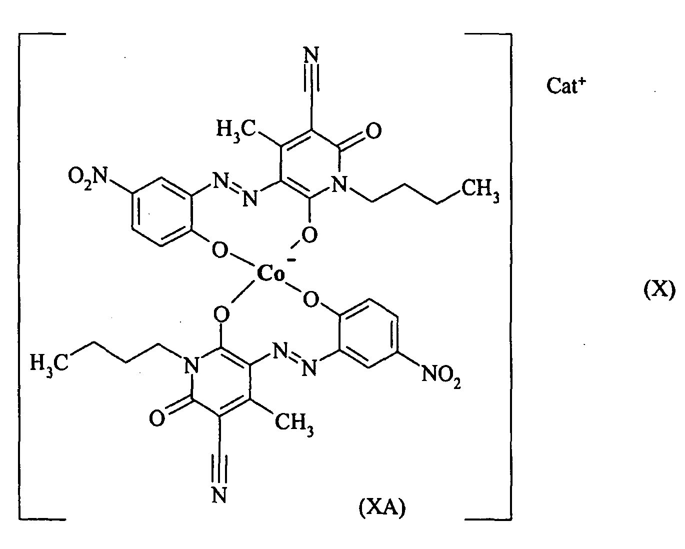 wherein
- Cat⁺: is a cation of a Basic Yellow dye.

The component (A) is a compound of formula (I) also in all the preferred aspects of the formula (I) as described above. Preferably the component (A) is a compound of formula (I) with A in formula (I) being a group of formula (II); also in all the preferred aspects of the formulae (I) and (II).

The cation Cat⁺ is a cation of a Basic Yellow dye, also called basic yellow cation in the following, with the expression Basic Yellow as defined in the Color Index: colour index international, fourth edition, © Society of Dyers and Colourists and American Association of Textile Chemists and Colorists 2002.
Preferably, the basic yellow cation Cat⁺ is selected from the group of cations consisting of the cations of Basic Yellow 1, Basic Yellow 2, Basic Yellow 11, Basic Yellow 13, Basic Yellow 21, Basic Yellow 24, Basic Yellow 28, Basic Yellow 29, Basic Yellow 37, Basic Yellow 49, Basic Yellow 51, Basic Yellow 57 and Basic Yellow 90.

More preferably, the basic yellow cation is selected from the group of cations consisting of the cations of Basic Yellow 1, Basic Yellow 2, Basic Yellow 11, Basic Yellow 13, Basic Yellow 28 and Basic Yellow 29;

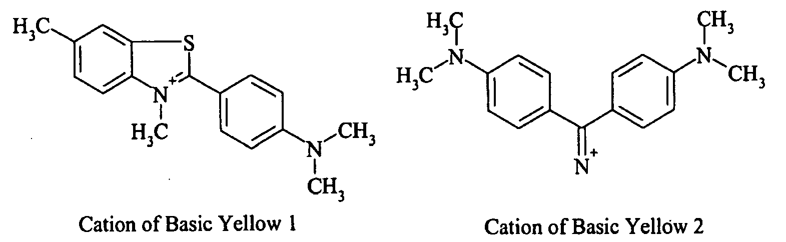

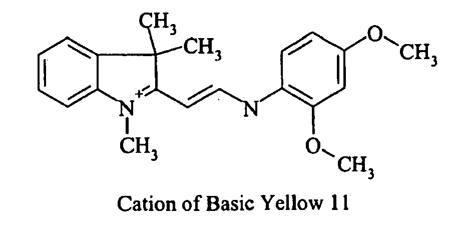

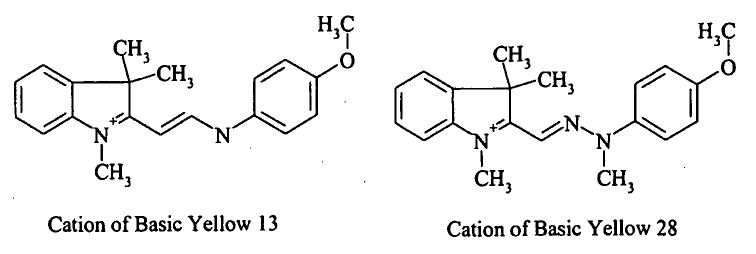

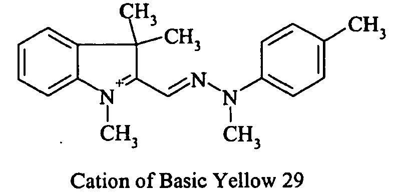

Even more preferably, the component (A) is a compound selected from the group consisting of compounds of formulae (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34), (35), (36), (37), (38), (39), (40), (41), (42), (43) and (44); and
the component (B) is a compound selected from the group consisting of compounds of formulae (XA1), (XA2), (XA11), (XA13), (XA28) and (XA29), these formulae being as defined in table 1.

| **Table 1: Compounds of formula (X)** | |
|---|---|
| **Compound of formula** | **Cat+** |
| **(XA1)** | Basic Yellow 1 |
| **(XA2)** | Basic Yellow 2 |
| **(XA11)** | Basic Yellow 11 |
| **(XA13)** | Basic Yellow 13 |
| **(XA28)** | Basic Yellow 28 |
| **(XA29)** | Basic Yellow 29 |

Especially preferably, the component (A) is a compound selected from the group consisting of compounds of formulae (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34), (35), (36), (37), (38), (39), (40), (41), (42), (43) and (44); and
the component (B) is a compound of formula (XA28).

More especially preferably, the component (A) is a compound of formula (17) or (22), and the component (B) is a compound of formula (XA28).

The composition (C) can also comprise as component (A) more than 1, preferably 2, 3 or 4, more preferably 2 or 3, compounds of formula (I), and/or as component (B) more than 1, preferably 2, 3 or 4, more preferably 2 or 3, compounds of formula (X).

Preferably, the ratio of the weight of the component (A) to the weight of the component (B) is of from between 0.01 and 0.99 to 0.99 and 0.01, more preferably of from between 0.05 and 0.95 to 0.95 and 0.05, even more preferably of from between 0.1 and 0.9 to 0.9 and 0.1.

Especially preferably the ratio of the weight of the component (A) to the weight of the component (B) is of from between 0.01 and 0.50 to 0.99 and 0.50, more preferably of from between 0.025 and 0.40 to 0.975 and 0.60, even more preferably of from between 0.05 and 0.30 to 0.95 and 0.70.

Preferably, the composition (C) comprises preferably 10 to 100 % by weight, more preferably 25 to 100 % by weight, even more preferably 50 to 100 % by weight, especially 75 to 100 % by weight, in particular 90 to 100 % by weight, based on the total weight of the composition (C), of the combined amounts of the component (A) and component (B).

Preferable further components, which are present in the compositions (C), are the "further customary components" mentioned below in the section "(d) Optical layer".

The compounds of formula (X) are known compounds from the WO 2006/106110 A and can be prepared according to its disclosure. Further, they can be prepared by metathesis reaction starting from a specific compound comprising an anion of formula (XA) and exchanging it's cation by the desired cation, for example by reacting a compound comprising an anion of formula (XA) and a cation like triethylammoniumion, prepared according to WO 2006/106110 A, with the basic yellow dye with the desired basic yellow cation. The molar ratio of the starting compound comprising an anion of formula (XA) to the basic yellow dye with the desired basic yellow cationcan vary in wide ranges, thereby also mixtures of compounds of formula (X) having different cations are available. Component (B) in the compositions (C) therefore can also be a mixture of the compound of formula (XA) and one or more, preferably one, two or three different cations Cat+ in the required stoichiometric ratios to result in a neutral compound of formula (X). Preferably, the metathesis reaction is done in a solvent, preferably in acetonitrile, water, ethanol or mixtures thereof. Preferably, the metathesis reaction is done under atmospheric pressure, preferably at temperatures between room temperature and boiling point of the solvent.

Preferably, the composition (C) consists essentially of the component (A) and (B).

The composition (C) are preferably prepared by physically combining the components (A) and (B), preferably the physically combining is done by blending or mixing, the blending or mixing is preferably done in the solid, molten or dissolved state of the components; preferably the blending or mixing is done by dry blending, by mixing the slurries or the solutions of the components; or the mixing is done by a combination of any of the mentioned measures.

In case of dry blending, the component (A) is mixed physically with the component (B) preferably in a mill, in a shaker or in any other mechanical device leading to homogeneous mixture of components (A) and (B).

In case of slurry blending, also called wet mixing, the component (A) is mixed physically with the component (B) preferably in a solvent. The solvent is preferably at least one organic solvent, water or a mixture of at least one organic solvent with water. More preferably, the solvent is selected from the group consisting of alcohols, chlorinated solvents, alkanes, aromatic solvents, ketones and water, even more preferably of methanol, ethanol, propanol, butanol, 2,2,3,3-tetrafluoropropan-1-ol (TFP), dichloromethane, chloroform, hexane, heptane, toluene, dichlorobenzene, acetone, methyl ethyl ketone, methyl tert-butyl ketone and water.

To obtain dry blends from the slurry, the solvent is removed by conventional methods known in the art, preferably by filtration or distillation, and the resulting presscake is dried.

In the case that the components are blended in form of their solutions, the components are preferably dissolved in the solvent either individually or in form of a premixture of the components.

A further subject of the invention is the use of the composition (C) comprising the component (A) and the component (B), and the use of the composition (C) comprising the component (A) and the component (B) in all the preferred aspects of the components (A) and (B) as described above, in an optical layer, preferably in an optical layer for optical data recording.

A further subject of the invention is the use of the composition (C) comprising the component (A) and the component (B), and the use of the composition (C) comprising the component (A) and the component (B) in all the preferred aspects of the components (A) and (B) as described above, as a dye in an optical layer, preferably for optical data recording.

A further subject of the invention is an optical layer comprising at least one compound of formula (I), with the compound of formula (I) also in all its described embodiments, particularly at least one compound of formula (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34), (35), (36), (37), (38), (39), (40), (41), (42), (43) or (44); and the use of said optical layer for optical data recording media. An optical layer according to the invention may also comprise a mixture of two or more, preferably of two or three, more preferably of two compounds of formula (I). A further subject of the invention therefore is an optical data recording medium comprising an optical layer comprising at least one compound of formula (I).

A further subject of the invention is an optical layer comprising at least one compound of formula (I), with the compound of formula (I) also in all its described embodiments, particularly at least one compound of formula (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34), (35), (36), (37), (38), (39), (40), (41), (42), (43) or (44), and at least one compound of formula (X), with the compound of formula (X) also in all its described embodiments; and the use of said optical layer for optical data recording media. An optical layer according to the invention may also comprise two or more, preferably two or three, more preferably two compounds of formula (I), and two or more, preferably two or three, more preferably two compounds of formula (X). A further subject of the invention therefore is an optical data recording medium comprising an optical layer comprising at least one compound of formula (I) and at least one compound of formula (X).

Further, the invention relates to a method for producing an optical layer comprising the following steps
(a) providing a substrate,
(b) dissolving at least one compound of formula (I), particularly at least one compound of formula (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34), (35), (36), (37), (38), (39), (40), (41), (42), (43) or (44), in an organic solvent to form a solution,
(c) coating the solution (b) on the substrate (a),
(d) evaporating the solvent to form an optical layer.

Further, the invention relates to a method for producing an optical layer comprising the following steps
(a) providing a substrate,
(b) dissolving at least one compound of formula (I) and at least one compound of formula (X), by
   (b1) dissolving a composition (C) comprising the component (A) and the component (B) in an organic solvent to form a solution, or
   (b2a) dissolving at least one compound of formula (I) in an organic solvent to form a solution, and
   (b2b) dissolving at least one compound of formula (X) in an organic solvent to form a solution, or
   (b3) dissolving at least one compound of formula (I) together with at least one compound of formula (X) in an organic solvent to form a solution,
(c) coating the solution or the solutions on the substrate by
   (c1) coating the solution (b1) or the solution (b3) on the substrate (a), or
   (c2) coating the solution (b2a) on the substrate (a), evaporating the solvent, and coating the solution (b2b) on the substrate (a),
(d) evaporating the solvent to form an optical layer.

### (a) Substrate

The substrate, which functions as support for the layers applied thereto, is advantageously semi-transparent (transmittance T>10%) or preferably transparent (transmittance T>90%). The support can have a thickness of from 0.01 to 10 mm, preferably from 0.1 to 5 mm.

Suitable substrates are, for example, glass, minerals, ceramics and thermosetting or thermoplastic plastics. Preferred supports are glass and homo- or co-polymeric plastics. Suitable plastics are, for example, thermoplastic polycarbonates, polyamides, polyesters, polyacrylates and polymethacrylates, polyurethanes, polyolefins, polyvinyl chloride, polyvinylidene fluoride, polyimides, thermosetting polyesters and epoxy resins. The most preferred substrates are polycarbonate (PC) or polymethylmethacrylate (PMMA).

The substrate can be in pure form or may also comprise customary additives, for example UV absorbers as light-stabilizers for the optical layer.

The substrate is advantageously transparent over at least a portion of the range from 350 to 500 nm, so that it is permeable to at least 90% of the incident light of the writing or readout wavelength.

### (b) Organic solvents

Organic solvents are selected from C₁₋₈ alcohols, halogen substituted C₁₋₈ alcohols, C₁₋₈ ketones, C₁₋₈ ethers, halogen substituted C₁₋₄ alkanes, nitriles, preferably acetonitrile, or amides, or mixtures thereof.

Preferred C₁₋₈ alcohols or halogen substituted C₁₋₈ alcohols are for example methanol, ethanol, isopropanol, diacetone alcohol (DAA), 2,2,3,3-tetrafluoropropan-1-ol, trichloroethanol, 2-chloroethanol, octafluoropentanol or hexafluorobutanol, more preferred 2,2,3,3-tetrafluoropropan-1-ol.

Preferred C₁₋₈ ketones are for example acetone, methylisobutylketone, methylethylketone, or 3-hydroxy-3-methyl-2-butanone.

Preferred halogen substituted C₁₋₄ alkanes are for example chloroform, dichloromethane or 1-chlorobutane.

Preferred amides are for example DMF, dimethylacetamide or NMP.

### (c) Coating methods

Suitable coating methods are, for example, immersion, pouring, brush-coating, blade-application and spin-coating, as well as vapor-deposition methods carried out under a high vacuum. When pouring methods are used, solutions in organic solvents are generally used. When solvents are employed, care should be taken that the supports used are insensitive to those solvents. The optical layer is preferably applied by spin-coating with a dye solution.

### (d) Optical layer

The optical layer is preferably arranged between the transparent substrate and the reflecting layer. The thickness of the recording layer is from 10 to 1000 nm, preferably from 30 to 300 nm, more preferably from 70 to 250 nm, especially about 80 nm, for example from 60 to 120 nm.

The optical layer comprises a compound of formula (I), or both the compound of formula (I) and the compound of formula (X), or a composition (C), preferably in an amount sufficient to have a substantial influence on the refractive index, for example at least 30% by weight of the total weight of the optical layer, more preferably at least 60% by weight, most preferably at least 80% by weight.

Further customary components are stabilizers, for example ¹0₂-, triplet- or luminescence quenchers, melting-point reducers, decomposition accelerators or any other additives that have already been described in optical data recording media. Preferably, stabilizers or fluorescence-quenchers are added if desired.

Stabilizers, ¹0₂-, triplet- or luminescence-quenchers are, for example, metal complexes of N- or S-containing enolates, phenolates, bisphenolates, thiolates or bisthiolates, hindered phenols and derivatives thereof such as o-hydroxyphenyl-triazoles or -triazines or other UV absorbers, such as hindered amines (TEMPO or HALS, as well as nitroxides or NOR-HALS), and also as cations diimmonium, Paraquat^{™} or Orthoquat salts, such as ^{®}Kayasorb IRG 022, ^{®}(ayasorb IRG 040, optionally also as radical ions, such as N,N,N',N'-tetrakis(4-dibutylaminophenyl)-p-phenylene amine-ammonium hexafluorophosphate, hexafluoroantimonate or perchlorate. The latter are available from Organica (Wolfen/DE); ^{®}Kayasorb brands are available from Nippon Kayaku Co. Ltd. In a preferred aspect, the present invention provides for an optical layer suitable for high-density recording material, e.g. of the WORM disc format, in a laser wavelength range of from 350-450nm, preferably around 405 nm.

### Preparation of the optical data recording medium

A method for producing an optical data recording medium comprising an optical layer according to the invention usually comprises the following additional steps
(e) applying a metal layer, also called reflective layer, onto the optical layer,
(f) applying a second polymer based layer to complete the disk, also called cover layer or protective layer.

### (e) Reflective layer

The application of the metallic reflective layer is preferably effected by sputtering, vapor-deposition in vacuum or by chemical vapor deposition (CVD). The sputtering technique is especially preferred for the application of the metallic reflective layer.

Reflecting materials suitable for the reflective layer include especially metals, which provide good reflection of the laser radiation, used for recording and playback, for example the metals of Main Groups III, IV and V and of the Sub-groups of the Periodic Table of the Elements. Al, In, Sn, Pb, Sb, Bi, Cu, Ag, Au, Zn, Cd, Hg, Sc, Y, La, Ti, Zr, Hf, V, Nb, Ta, Cr, Mo, W, Fe, Co, Ni, Ru, Rh, Pd, Os, Ir, Pt, Ce, Pr, Nd, Pm, Sm, Eu, Gd, Tb, Dy, Ho, Er, Tm, Yb and Lu and alloys thereof are especially suitable. Special preference is given to a reflective layer of aluminum, silver, copper, gold or an alloy thereof, on account of their high reflectivity and ease of production.

### (f) Cover layer

Materials suitable for the cover layer include plastics, which are applied in a thin layer to the support or the uppermost layer either directly or with the aid of adhesive layers. The material of the cover layer may for example be the same as the material of the substrate. It is advantageous to select mechanically and thermally stable plastics having good surface properties, which may be modified further.

The plastics may be thermosetting plastics and thermoplastic plastics. Preference is given to radiation-cured (e.g. using UV radiation) protective layers, which are particularly simple and economical to produce. A wide variety of radiation-curable materials are known. Examples of radiation-curable monomers and oligomers are acrylates and methacrylates of diols, triols and tetrols, polyimides of aromatic tetracarboxylic acids and aromatic diamines having C₁-C₄alkyl groups in at least two ortho-positions of the amino groups, and oligomers with dialkylmaleinimidyl groups, e.g. dimethyl maleinimidyl groups.

A high-density optical data recording medium according to the invention therefore preferably is a recordable optical disc comprising: a first substrate, which is a transparent substrate with grooves, a optical layer (recording layer), which is formed on the first substrate surface using the compound of formula (I), or using both the compound of formula (I) and the compound of formula (X), or using the compositions (C), a reflective layer formed on the optical layer, a second substrate, which is a transparent substrate connected to the reflective layer with an attachment layer.

The optical data recording medium according to the invention is preferably a recordable optical disc of the WORM type. It may be used, for example, as a playable HD-DVD (high density digital versatile disc) or Blu-ray^{®} disc, as storage medium for a computer or as an identification and security card or for the production of diffractive optical elements, for example holograms.

The optical data recording media according to the invention may also have additional layers, for example interference layers. It is also possible to construct optical data recording media having a plurality of (for example two) recording layers. The structure and the use of such materials are known to the person skilled in the art. Preferred, if present, are interference layers that are arranged between the recording layer and the reflecting layer and/or between the recording layer and the substrate and consist of a dielectric material of Ti0₂, Si₃N₄, ZnS or silicone resins.

These optical data recording media according to the invention can be produced by processes known in the art.

### Readout methods

The structure of the optical data recording medium according to the invention is governed primarily by the readout method; known function principles include the measurement of the change in the transmission or, preferably, in the reflection, but it is also known to measure, for example, the fluorescence instead of the transmission or reflection.

When the optical data recording medium is structured for a change in reflection, the following structures can be used: transparent support / recording layer (optionally multilayered) / reflective layer and, if expedient, protective layer (not necessarily transparent); or support (not necessarily transparent) / reflective layer / recording layer and, if expedient, transparent protective layer. In the first case, the light is incident from the support side, whereas in the latter case the radiation is incident from the recording layer side or, where applicable, from the protective layer side. In both cases the light detector is located on the same side as the light source. The first-mentioned structure of the recording material to be used according to the invention is generally preferred.

When the optical data recording medium is structured for a change in light transmission, the following different structure comes into consideration: transparent support/recording layer (optionally multilayered) and, if expedient, transparent protective layer. The light for recording and for readout can be incident either from the support side or from the recording layer side or, where applicable, from the protective layer side, the light detector in this case always being located on the opposite side.

Suitable lasers are those having a wavelength of 330-500 nm, for example commercially available lasers having a wavelength of 405 to 414 nm, especially semi-conductor lasers. The recording is done, for example, point for point, by modulating the laser in accordance with the mark lengths and focusing its radiation onto the recording layer. It is known from the specialist literature that other methods are currently being developed which may also be suitable for use.

The process according to the invention allows the storage of information with great reliability and stability, distinguished by very good mechanical and thermal stability and by high light stability and by sharp boundary zones of the pits. Special advantages include the high contrast, the low jitter and the surprisingly high signal/noise ratio, so that excellent readout is achieved.

The readout of information is carried out according to methods known in the art by registering the change in absorption or reflection using laser radiation.

The invention accordingly relates also to a method for the optical data recording, storage and playback of information, wherein an optical data recording medium according to the invention is used. The recording and the playback advantageously take place in a wavelength range of from 330 to 500 nm.

The compounds of formula (I), and the combination of the compounds of formula (I) together with the compounds of formula (X), and the compositions (C), provide for particularly preferable properties when used in optical layers for optical data recording media according to the invention. They possess the required optical characteristics, demonstrated when used in the form of a solid film:
- an advantageously homogeneous, amorphous and low-scattering optical layer,
- a high refractive index at the longer wavelength flank of the absorption band, which preferably achieves n values of the refractive index of from 1.0 to 3.0 in the range of from 330 to 500 nm,
- a high sensitivity under laser radiation of high power density and good playback characteristics in the desired spectral range,
- an enhanced photosensitivity and stability (in daylight and under laser radiation of low power density) compared to dyes already known in the art,
- an uniform script width and a high contrast,
- an absorption maximum (λ max) in the preferred range between 330 nm and 500 nm as being preferred for blue laser applications, more precisely from 380 to 460 nm,
- a decomposition point (DP) in the preferred temperature range between 180°C and 300°C, more precisely 200°C to 290°C
- a sufficient heat release (HR)

Recording performance of a compound is related to specific parameters measured on disc like:
- a low simulated bit error rate (SbER)
- a low inner parity error rate (PI error)
- a high reflectivity (R)
- a low laser recording power (Pw: power, or OPC: optimum power control): the lower the better
- good readout stability at different laser reading powers
- an appropriate partial response signal to noise ratio (PRSNR): the higher the better

The absorption edge is surprisingly steep even in the solid phase.

The compounds of formula (I), the combination of the compounds of formula (I) together with the compounds of formula (X), and the compositions (C), also show a narrow decomposition temperature of 180 to 350°C, fitting with the thermal requirements. Additionally, these compounds show a high solubility in organic solvents, which is ideal for the spin-coating process to manufacture optical layers.

Further surprisingly the compositions (C) or the use of both the compounds of formula (I) together with the compounds of formula (X) in the optical layer, provide for unexpected better results, when compared with the performance of the individual compounds.

The use of the compositions (C) or of a combination of a compound of formula (I) together with a compound of formula (X) in an optical layer for optical data recording allows unexpectedly the data recoding at higher speeds than the conventional 1X speed in HD-DVD and Blu-ray-discs.

As a result of the use of the dyes of the invention, the recording media of the invention advantageously have homogeneous, amorphous and low scattering recording layers. Further advantages is the light stability in day light and under laser radiation of 0.4 mW, combined with a high sensitivity under laser radiation of moderate, this means as low as possible, power density (OPC preferably < 8.0 mW for 1X speed and preferably < 11 mW for 2X speed), the good thermal and storage stability. Especially in case of recording at higher speed, the OPC required should be as low as possible.

### Examples

### UV-vis

For UV-vis spectra, λ max and ε values of a compound are determined by using an UV-vis spectrophotometer, the compound was dissolved in CH₂Cl₂, DMSO or in tfp. The values are obtained by balancing the measurements performed on compound solutions at three different concentrations.

### Melting point (MP)

For the determination of melting point, the compound or the composition is incorporated in a glass capillary. The capillary was heated using the following profile: temperature range from 20 to 350 °C, heating rate 2 °C/min.

### Thermal Decomposition: Decomposition point (DP) and heat release (HR)

For the determination of DP and HR, the compound is incorporated into a sealed aluminum pan. Analysis conditions are as following: Temperature range from 25 to 400°C, heating rate 10°C/min, nitrogen flow of 50 ml/min. Values are determined by single measurement. Additionally, thermal decomposition is also being observed while measuring the melting point.

### Partial response signal to noise ratio (PRSNR)

A definition and the measuring techniques of PRSNR are described in a book available from DVD Format Logo Licensing Co., Ltd. for example, Annex H of Version 0.9, PART 1 Physical Specifications, DVD Specifications for High Density Read-Only Disk. The higher the PRSNR the better.

### Simulated bit error rate (SbER)

A definition and the measuring techniques of SbER are described in a book available from DVD Format Logo Licensing Co., Ltd. for example, Annex H of Version 0.9, PART 1 Physical Specifications, DVD Specifications for High Density Read-Only Disk. The lower the SbER the better.

PRSNR and SbER are measured in a state in which information has been recorded in the adjacent tracks.

### Reflectivity (R)

A definition and the measuring techniques for the light reflectivity (R) is described in a book available from DVD Format Logo Licensing Co., Ltd. for example, Annex D of Version 0.9, PART 1 Physical Specifications, DVD Specifications for High Density Read-Only Disk. The higher the R the better.

### Cycle number

The degree of degradation of various parameters, e.g. of the PRSNR and SbER, due to repetitive read out is measured. The higher the cycle number until reaching the minimum specifications or a comparable performance the better.

"Ex." means example, "Comp. Ex." means comparative example.

### Example 1

To a mixture of 0.59 g of 2-Ethynyl-phenylamine, 10 ml of water and 1.75 g of aqueous hydrochloric acid (31% w/w) was gradually added 0.65 ml of aqueous sodium nitrite (40 % w/v) at 0°C. After 30 min stirring at 0°C, the dark diazotization solution was added dropwise to a solution of 0.78 g of 1,3-Dimethyl-barbituric acid, 1.85 g sodium acetate and 5 ml of methanol in 10 ml of water of 20 °C. The batch was stirred for 2 hours at 20 °C and then filtered with suction. The precipitate was washed with water and dried. 1.26 g of the compound of formula (1) were obtained.

### Example 2

To a mixture of 0.59 g of 3-Ethynyl-phenylamine, 10 ml of water and 1.75 g of aqueous hydrochloric acid (31% w/w) was gradually added 0.65 ml of aqueous sodium nitrite (40% w/v) at 0°C. After 1 hour stirring at 0°C, the dark diazotization solution was added dropwise to a solution of 1.0 g of 1,3-Diethyl-2-thio-barbituric acid, 1.85 g sodium acetate and 5 ml of methanol in 10 ml of water of 20 °C. The batch was stirred for 2 hours at 20 °C and then filtered with suction. The precipitate was washed with water and dried. 1.58 g of the compound of formula (2) were obtained.

### Example 3

A mixture of 1.17 g of 4-Ethynyl-phenylamine, 20 ml of water and 3.5 g of aqueous hydrochloric acid (31% w/w) was gradually added 1.3 ml of aqueous sodium nitrite (40% w/v) at 0°C. After 30 min stirring at 0°C, the dark diazotization solution was added dropwise to a solution of 2.1 g of 1-Butyl-6-hydroxy-4-methyl-2-oxo-1,2-dihydro-pyridine-3-carbonitrile, 3.7 g sodium acetate and 7 ml of methanol in 20 ml of water of 20 °C. The batch was stirred for 2 hours at 5 °C and then filtered with suction. The precipitate was washed with water and dried. 3.12 g of the compound of formula (3) were obtained.

### Examples 4 to 13

The preparation according to example 1 was done using the respective coupling agent in a stoichiometric ratio with regard to the respective amine compound to yield the compounds of formula (4) to (13). The combinations and details are given in table (A1).

| | **Table (A1)** | | | | | |
|---|---|---|---|---|---|---|
| **Ex.** | **coupling agent** | | **amine compound** | | **compound of formula** | |
| | | **[g]** | | **[g]** | | **[g]** |
| **1** | 1,3-Dimethyl-barbituric acid | 0.78 | 2-Ethynyl-phenylamine | 0.59 | (1) | 1.3 |
| **2** | 1,3-Diethyl-2-thio-barbituric acid | 1.0 | 3-Ethynyl-phenylamine | 0.59 | (2) | 1.6 |
| **3** | 1-Butyl-6-hydroxy-4-methyl-2-oxo-1,2-dihydro-pyridine-3-carbonitrile | 2.1 | 4-Ethynyl-phenylamine | 1.2 | (3) | 3.1 |
| **4** | 1-Butyl-6-hydroxy-4-methyl-2-oxo-1,2-dihydro-pyridine-3-carbonitrile | 2.1 | 3-Ethynyl-phenylamine | 1.2 | (4) | 3.2 |
| **5** | 1,3-Dimethyl-barbituric acid | 0.78 | 4-Ethynyl-phenylamine | 0.59 | (5) | 1.4 |
| **6** | 1,3-Dimethyl-barbituric acid | 0.78 | 3-Ethynyl-phenylamine | 0.59 | (6) | 1.2 |
| **7** | 2-Hydroxy-4-methyl-6-oxo-1-phenylamino-1,6-dihydro-pyridine-3-carbonitrile | 1.2 | 2-Ethynyl-phenylamine | 0.59 | (7) | 1.7 |
| **8** | 2-Hydroxy-4-methyl-6-oxo-1-phenylamino-1,6-dihydro-pyridine-3-carbonitrile | 1.2 | 4-Ethynyl-phenylamine | 0.59 | (8) | 1.5 |
| **9** | Sodium; 4-ethoxycarbonyl-5,5-dimethyl-3-oxo-cyclohex-1-enolate | 3.0 | 2-Ethynyl-phenylamine | 1.2 | (9) | 3.0 |
| **10** | Sodium; 4-ethoxycarbonyl-5,5-dimethyl-3-oxo-cyclohex-1-enolate | 3.0 | 3-Ethynyl-phenylamine | 1.2 | (10) | 3.2 |
| **11** | Sodium; 4-ethoxycarbonyl-5,5-dimethyl-3-oxo-cyclohex-1-enolate | 3.0 | 4-Ethynyl-phenylamine | 1.2 | (11) | 3.1 |
| **12** | 1,3-Diethyl-2-thio-barbituric acid | 1.0 | 4-Ethynyl-phenylamine | 0.59 | (12) | 1.5 |
| **13** | 1-Butyl-6-hydroxy-4-methyl-2-oxo-1,2-dihydro-pyridine-3-carbonitrile | 2.1 | 2-Ethynyl-phenylamine | 1.2 | (13) | 2.8 |

Table A2 shows the phys-chem properties of the compounds of formulae (1) to (13).

| **Table (A2)** | | | | |
|---|---|---|---|---|
| **Ex.** | **Compound of formula** | λ **max [nm]** | ε **(at** λ **max) (L / g * cm]** | **MP/ DP [°C]** |
| **1** | (1) | 390 | 83 | 220 (MP) |
| **2** | (2) | 409 | 103 | 180 (MP) |
| **3** | (3) | 438 | 110 | 175 (MP) |
| **4** | (4) | 424 | 107 | 210 (MP) |
| **5** | (5) | 396 | 105 | 225 (MP) |
| **6** | (6) | 381 | 92 | 208 (MP) |
| **7** | (7) | 423 | 62 | 230 (DP) |
| **8** | (8) | 429 | 86 | 220 (DP) |
| **9** | (9) | 403 | 49 | 109 (MP) |
| **10** | (10) | 384 | 54 | 140 (MP) |
| **11** | (11) | 414 | 63 | 105 (MP) |
| **12** | (12) | 418 | 107 | 215 (MP) |
| **13** | (13) | 434 | 92 | 212 (DP) |

### Example 14

0.67 g of a compound of formula (3) and 0.25 g of nickel-(II)-acetate tetrahydrate were suspended in 10 ml of ethanol. After stirring at reflux temperature for 7 h, the suspension is cooled to room temperature and filtered. The orange presscake is washed with ethanol and dried in vacuum at 80 °C for 4 h.
0.71 g of a compound of formula (14) were obtained.

Analytical data for compound of formula (14):
λ ₘₐₓ = 429 nm, ε = 81 L/g*cm, DP: 250 °C.

### Example 15

0.67 g of a compound of formula (3) and 0.25 g of cobalt-(II)-acetate tetrahydrate were suspended in 10 ml of ethanol. After 5 h of reflux, the ethanol was stripped off and replaced by 10 mL of acetonitrile. 0.5 mL of pyridine were added. After stirring at reflux temperature for 3 h, the suspension is cooled to room temperature and filtered. The orange presscake is washed with ethanol and dried in vacuum at 80 °C for 4 h. 0.58 g of a compound of formula (15) were obtained.

Analytical data for compound of formula (15):
λ ₘₐₓ = 427 nm, ε = 87 L/g*cm, DP: 230 °C.

### Examples 16 to 44

The complexing reaction according to example 14 was repeated with the respective metal salts and with the respective compounds of formulae (1) to (13), prepared according to examples (1) to (13), to yield compounds of formulae (16) to (44). Refluxing time was 6 h.

| **Table (B1)** | | | | | | | | | |
|---|---|---|---|---|---|---|---|---|---|
| **Ex.** | **M** | **Used Metal salt** | | **Azo Ligand** | | **Solvent (Ethanol)** | **Addition ACN/Py (or TEA)** | **Compound of formula** | |
| | | | **[g]** | **Compound of formula** | **[g]** | **[mL]** | **[mL]** | | **[g]** |
| **14** | Ni | Ni(OAc)2 | 0.25 | (3) | 0.67 | 10 | - | (14) | 0,71 |
| **15** | Co | Co(OAc)2 | 0.25 | (3) | 0.67 | 10 | 10/0.5 | (15) | 0.58 |
| **16** | Cu | Cu(OAc)2 | 0.20 | (3) | 0.67 | 10 | - | (16) | 0.67 |
| **17** | Ni | Ni(OAc)2 | 0.25 | (4) | 0.67 | 10 | 15/0.5 | (17) | 0.69 |
| **18** | Co | Co(OAc)2 | 0.25 | (4) | 0.67 | 10 | 15/0.5 | (18) | 0.70 |
| **19** | Cu | Cu(OAc)2 | 0.20 | (4) | 0.67 | 15 ACN | -/0.5 | (19) | 0.13 |
| **20** | Ni | Ni(OAc)2 | 0.25 | (12) | 0.66 | 10 | -/0.5 | (20) | 0.55 |
| **21** | Cu | Cu(OAc)2 | 0.20 | (12) | 0.66 | 10 | -/0.5 | (21) | 0.40 |
| **22** | Ni | Ni(OAc)2 | 0.25 | (2) | 0.66 | 10 | -/0.5 | (22) | 0.68 |
| **23** | Cu | Cu(OAc)2 | 0.20 | (2) | 0.66 | 10 | -/0.5 | (23) | 0.19 |
| **24** | Ni | Ni(OAc)2 | 0.25 | (7) | 0.74 | 15 | -/1.0 | (24) | 0.61 |
| **25** | Cu | Cu(OAc)2 | 0.20 | (7) | 0.74 | 15 | -/2.5 | (25) | 0.44 |
| **26** | Ni | Ni(OAc)2 | 0.16 | (8) | 0.48 | 10 | -/5.0 | (26) | 0.29 |
| **27** | Cu | Cu(OAc)2 | 0.13 | (8) | 0.48 | 10 | -/1.0 | (27) | 0.26 |
| **28** | Ni | Ni(OAc)2 | 0.17 | (5) | 0.40 | 10 | /2.5 | (28) | 0.48 |
| **29** | Co | Co(OAc)2 | 0.17 | (5) | 0.40 | 10 | -/10 TEA | (29) | 0.43 |
| **30** | Cu | Cu(OAc)2 | 0.14 | (5) | 0.40 | 10 | -/0.5 | (30) | 0.34 |
| **31** | Ni | Ni(OAc)2 | 0.17 | (1) | 0.40 | 10 | -/0.5 | (31) | 0.19 |
| **32** | Cu | Cu(OAc)2 | 0.14 | (1) | 0.40 | 10 | -/0.5 | (32) | 0.34 |
| **33** | Ni | Ni(OAc)2 | 0.17 | (6) | 0.40 | 10 | -/10 TEA | (33) | 0.12 |
| **34** | Cu | Cu(OAc)2 | 0.14 | (6) | 0.40 | 10 | -/0.5 | (34) | 0.33 |
| **35** | Ni | Ni(ClO4)2 | 0.37 | (10) | 0.68 | 10 ACN | -/5.0 | (35) | 1.0 |
| **36** | Co | Co(OAc)2 | 0.25 | (10) | 0.68 | 7.0 | 10/4 | (36) | 0.21 |
| **37** | Cu | Cu(ClO4)2 | 0.13 | (10) | 0.24 | 8.0 ACN | -/0.5 | (37) | 0.20 |
| **38** | Ni | Ni(OAc)2 | 0.25 | (13) | 0.67 | 10 | - | (38) | 0.56 |
| **39** | Co | Co(OAc)2 | 0.25 | (13) | 0.67 | 10 | - | (39) | 0.58 |
| **40** | Cu | Cu(OAc)2 | 0.20 | (13) | 0.67 | 10 | - | (40) | 0.56 |
| **41** | Ni | Ni(OAc)2 | 0.25 | (11) | 0.68 | 10 | -/0.5 | (41) | 0.49 |
| **42** | Co | Co(OAc)2 | 0.25 | (11) | 0.68 | 10 | -/0.5 | (42) | 0.26 |
| **43** | Cu | Cu(OAc)2 | 0.20 | (11) | 0.68 | 10 | -/0.5 | (43) | 0.02 |
| **44** | Ni | Ni(OAc)2 | 0.25 | (2) | 0.33 | 15 ACN | -/0.5 | (44) | 0.39 |
| | | | | (3) | 0.33 | | | | |

| **Table (B2)** | | | | |
|---|---|---|---|---|
| **Ex.** | **λₘₐₓ [nm]** | **ε(at λₘₐₓ) [1/g/cm]** | **MP/DP [°C]** | **Compound of formula** |
| **14** | 429 | 81 | 250 (DP) | (14) |
| **15** | 427 | 87 | 230 (DP) | (15) |
| **16** | 428 | 95 | 240 (DP) | (16) |
| **17** | 416 | 75 | 220 (DP) | (17) |
| **18** | 414 | 77 | 240 (DP) | (18) |
| **19** | 417 | 66 | 246 (DP) | (19) |
| **20** | 402 | 74 | 225 (DP) | (20) |
| **21** | 447 | 94 | 260 (DP) | (21) |
| **22** | 391 | 62 | 200 (DP) | (22) |
| **23** | 398 | 56 | 302 (DP) | (23) |
| **24** | 416 | 27 | 225 (DP) | (24) |
| **25** | 420 | 11 1 | 195 (DP) | (25) |
| **26** | 425 | 73 | 237 (DP) | (26) |
| **27** | 434 | 59 | 280 (DP) | (27) |
| **28** | 396 | 61 | 260 (DP) | (28) |
| **29** | 394 | 65 | 250 (DP) | (29) |
| **30** | 416 | 86 | 310 (DP) | (30) |
| **31** | 395 | 42 | 310 (DP) | (31) |
| **32** | 350 | 13 | 169 (DP) | (32) |
| **33** | 378 | 50 | 330 (DP) | (33) |
| **34** | 387 | 88 | 280 (DP) | (34) |
| **35** | 372 | 25 | 195 (DP) | (35) |
| **36** | 386 | 62 | 145 (MP) | (36) |
| **37** | 384 | 18 | 150 (DP) | (37) |
| **38** | 423 | 53 | 250 (DP) | (38) |
| **39** | 419 | 59 | 195 (DP) | (39) |
| **40** | 335 | 53 | 315 (DP) | (40) |
| **41** | 387 | 43 | 240 (DP) | (41) |
| **42** | 388 | 46 | 250 (DP) | (42) |
| **43** | 447 | 95 | 185 (DP) | (43) |
| **44** | 425 | 66 | 250 (DP) | (44) |

Table B1 gives the details of example 14 to 44: To all of the reactions except examples 14, 16, 38, 39 and 40 was added pyridine ("Py" in table B1) after refluxing; to the reactions of examples 15, 17, 18 and 36 was added acetonitrile ("ACN" in table B1) after refluxing. To the reactions of examples 29 and 33 was added triethylamine ("TEA" in table B1) instead of pyridine. The reactions of examples 19, 37 and 44 were carried out in refluxing acetonitrile, the other reactions in ethanol ("Solvent Ethanol" in table B1). Work-up and isolation of product was performed as described in example 14. If no suspension was formed during refluxing, the solvent of reaction mixture was stripped off by distillation until precipitation occured. The suspension was filtered, the presscake washed and dried as described in examples 14. In table B1, if the used metal salt is stated to be Ni(OAc)₂, Co(OAc)₂ or Cu(OAc)₂, it was always the tetrahydrate, that was used. In table B1, if the used metal salt is stated to be Ni(ClO4)₂ or Cu (ClO4)₂, it was always the hexahydrate, that was used.

Table B2 shows the phys-chem properties of the compounds of formulae (14) to (44).

### Preparation of the compositions (C)

In the following, "%" means "% by weight", and the amount of a component in a composition (C) is given in % by weight based on the total weight of the composition, if not otherwise stated.

### Process of dry blending of powders of the components (DB)

A composition is prepared by blending the corresponding powders of the components e.g. by a mill base or any other mechanically grinding.

### Process of wet mixing of the components (WM)

In case of wet mixing, the solvent has to be carefully selected in order to prevent a complete solubilization of any component, because this would not result in the desired composition.

### Process of Dissolving of the components (DISS)

The solvent has to be carefully selected in order to obtain a complete solubilization of the mixture components.

### Example 45: Dissolving (DISS)

A composition (c50), consisting of 20 % by weight of compound of formula (17) and 80 % by weight of compound of formula (XA28), is prepared by dissolving completely in 2,2,3,3-tetrafluoropropan-1-ol the corresponding powders of the components. The solution is stirred for 1 hour at room temperature and evaporated in vacuum. The resulting precipitate is further dried in a vacuum oven at 60°C for 6 hours.

Details about the amounts and the preparation of the compositions (c50) according to the example 45 are given in table C.

| **Table C** | | | | | | |
|---|---|---|---|---|---|---|
| **Ex.** | **Composition (C)** | **Process** | **Component (B)** | | **Component (A)** | |
| | | | **formula of compound of formula (X)** | **%** | **formula of compound of formula (I)** | **%** |
| **45** | (c50) | DISS | (XA28) | 80 | (17) | 20 |

### Process of the simultaneous use of the components (A) and (B) (SIM)

The individual components (A) and (B) are used according to application example 4, resulting in an optical layer, which comprises both components.

### Application Example 1

The optical and thermal properties of the compounds of formula (I) and of the compositions (C) were studied. The compounds of formula (I) and of the compositions (C) show high absorption at the desired wavelengths. In addition, the shapes of the absorption spectra, that still remain critical to the disc reflectivity and formation of clean mark edges, are composed of one major band, comprised in a range of from 330 to 500 nm.
More precisely, n values of the refractive index were evaluated between 1.0 and 2.7. Light stabilities were found comparable to commercial dyes which are already stabilized with quenchers for the use in optical data recording.
Sharp threshold of thermal decomposition within the required temperature range characterizes the compounds of formula (I) and of the compositions (C), which are desirable for the application in optical layers for optical data recording.

### Application Example 2, 3 and 4 - Optical layer and optical data recording medium

1.4% by weight, based on the weight of the solvent, of the composition (c50), prepared according to example 45 (application example 2), or 0.14 % by weight of the compound of formula (17), prepared according to example 17, and 1.26 % by weight of the compound of formula (XA28) (application example 3, SIM), or 1.4% by weight, based on the weight of the solvent, of the compound of formula (22), prepared according to example 22 (application example 4), are dissolved in 2,2,3,3-tetrafluoropropan-1-ol and the solution is filtered through a Teflon filter of pore size 0.2 µm and applied by spin-coating at 1000 rpm to the surface of a 0.6 mm thick, grooved polycarbonate disc of 120 mm diameter. The excess solution is spun off by increasing the rotational speed. On evaporation of the solvent, the dye remains behind in the form of a uniform, amorphous solid layer, the optical layer. After drying the optical layer in a circulating-air oven at 70°C (10 min) in a vacuum coating apparatus, a 100 µm thick silver layer is then applied to the recording layer by atomization. Then a 6 µm thick protective layer of a UV curable photopolymer (650-020, DSM) is applied thereto by means of spincoating. Finally, a second substrate is provided to combine with the resin protection layer using an attachment layer. This completes the manufacturing of a high-density recordable optical disc, the optical data recording medium.
Evaluation tests are performed using an optical disk evaluation device available from Pulse Tech Co., Ltd.
The testing conditions are the following ones:
- Numerical aperture (NA) of the optical head: 0.65
- Wavelength of a laser light for recording and reproduction: 405 nm
- Constant linear velocity (CLV): 6.61 m/sec.
- Track pitch: 400 nm
- Wobble amplitude of the groove track: 14 nm
- Groove depth: 90 nm.

### Comparative example 1

Application example 2 was carried out using only the compound of formula (XA28). Results of the testing according to application examples 2 and 4 are summarized in the table (D).

| **Table (D)** | | | | | | |
|---|---|---|---|---|---|---|
| **Ex.** | **composition (C)/ Compound of formula** | **Pw(mW)** | **SbER** | **PRSNR** | **modulation** | **reflectivity** |
| | | | | | | |
| **Application example 2 and 4** | | | | | | |
| **45** | (c50) | 7.5 | 2.7*10E-07 | 28.8 | 0.54 | 17.2 |
| | (22) | 8.4 | 1.8*10E-10 | 16.6 | 0.54 | 13.9 |

| **Comp. Ex.** | **compound of formula** | **Pw(mW)** | **SbER** | **PRSNR** | **modulation** | **reflectivity** |
|---|---|---|---|---|---|---|
| **1** | (XA28) | 8 | 3.2*10E-06 | 22.3 | 0.49 | 19.40 |

A test for evaluating a degree of degradation due to repetition reproduction is conducted for each of the write-once optical disks made for the described recording layers. Readings are carried out at a reading laser power of 0.4 mW and the degrees of degradation of PRSNR and SbER are then measured. Maximum cycle number was found within the specifications.

## Claims

1. A compound of formula (I), 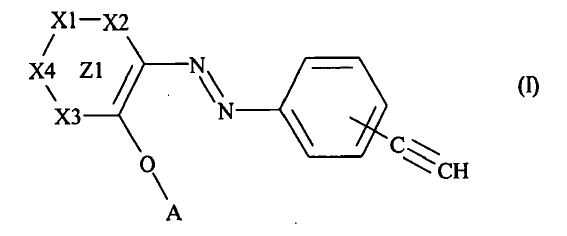 wherein the residue
A represents H or a group of formula (II); 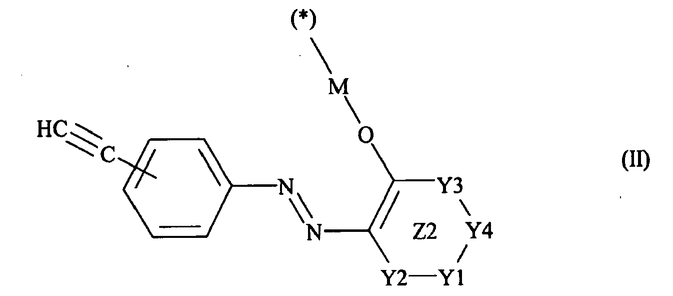
M represents a divalent metal atom;
(*) in formula (II) denotes the bond of the divalent metal atom M to the O atom in formula (I);
X1, X2, X3, X4, Y1, Y2, Y3 and Y4 are same or different and independently from each other selected from the group consisting of the divalent endocyclic groups C(R4R5), N(R6), O, S, C=N-R7, C=O and C=S and the trivalent endocyclic groups C(R4) and N;
R4 and R5 are same or different and independently from each other selected from the group consisting of H, CN, CF₃, halogen, NO₂, OH, SH, SO₂-NR²¹R²², CO-R³⁰, SO₂R³⁰, CO-NR²¹R²²,
C₁₋₁₀ alkyl, C₃₋₁₀ cycloalkyl, the C₁₋₁₀ alkyl and the C₃₋₁₀ cycloalkyl being independently from each other unsubstituted or substituted by 1 to 4 same or different substituents, the substituents being independently from each other selected from the group consisting of C₁₋₁₀ alkyl, halogen, OH, C₆₋₁₂ aryl and NR²¹R²²,
C₆₋C₁₂ aryl the C₆₋₁₂ aryl being unsubstituted or substituted by 1 to 4 same or different substituents, the substituents being independently from each other selected from the group consisting of C₁₋₁₀ alkyl, C₃₋₁₀ cycloalkyl, OH, NO₂, CN, halogen, CF₃, C₆₋₁₂ aryl,C₁₋₁₀ alkoxy and NR²¹R²²,
OC₁₋₁₀ alkyl, NR²¹R²² and SC₁₋₁₀ alkyl;
R6 and R7 are same or different and independently from each other selected from the group consisting of H, NR²¹R²²,
C₁₋₁₀ alkyl, C₃₋₁₀ cycloalkyl, the C₁₋₁₀ alkyl and the C₃₋₁₀ cycloalkyl being independently from each other unsubstituted or substituted by 1 to 4 same or different substituents, the substituents being independently from each other selected from the group consisting of C₁₋₁₀ alkyl, halogen, OH, C₆₋₁₂ aryl or NR²¹R²²,
C₆₋₁₂ aryl, C₁₋₆ alkyl-C₆₋₁₂ aryl, the C₆₋₁₂ aryl and the C₁₋₆ alkyl-C₆₋₁₂ aryl being independently from each other unsubstituted or substituted by 1 to 4 same or different substituents, the substituents being independently from each other selected from the group consisting of C₁₋₁₀ alkyl, C₃₋₁₀ cycloalkyl, OH, NO₂, CN, halogen, CF₃, C₆₋₁₂ aryl, C₁₋₁₀ alkoxy and NR²¹R²²;
the R²¹ and R²² residues are same or different and independently from each other selected from the group consisting of H, C₁₋₁₀ alkyl, C₆₋₁₂ aryl and C₁₋₁₂ alkyl-NR²³R²⁴;
the R²³ and R²⁴ residues are same or different and independently from each other selected from the group consisting of H, C₁₋₁₀ alkyl and C₆₋₁₂ aryl;
the R³⁰ residues are same or different and independently from each other selected from the group consisting of OH, C₁₋₆ alkyl, C₆₋₁₀ aryl and O-C₁₋₆ alkyl;
Z1 formula (I) and Z2 in formula (II) being unsaturated or aromatic cycles.

2. A compound of formula (I) according to claim 1, wherein
M is a divalent metal atom selected from the group consisting of Mg, Ca, Sr, Ba, Mn, Cu, Ni, Co, Zn and Fe;
X1, X2, X3, X4, Y1, Y2, Y3 and Y4 are same or different and independently from each other selected from the group consisting of the divalent endocyclic groups C(R4R5), N(R6), C=O and C=S and the trivalent endocyclic groups C(R4) and N;
R4 and R5 are same or different and independently from each other selected from the group consisting of H, CN, CF₃, F, Cl, Br, OH, CO-R³⁰,
C₁₋₁₀ alkyl, the C₁₋₁₀ alkyl being unsubstituted or substituted by 1 to 4 same or different substituents, the substituents being independently from each other selected from the group consisting of C₁₋₁₀ alkyl, F, Cl, Br, OH, phenyl and NR²¹R²²,
phenyl, the phenyl being unsubstituted or substituted by 1 to 4 same or different substituents, the substituents being independently from each other selected from the group consisting of C₁₋₁₀ alkyl, OH, NO₂, CN, F, Cl, Br, CF₃, phenyl, C₁₋₁₀ alkoxy and NR²¹R²²,
OC₁₋₁₀ alkyl and NR²¹R²²;
R6 is selected from the group consisting of H, NR²¹R²²,
C₁₋₁₀ alkyl, C₃₋₆ cycloalkyl, the C₁₋₁₀ alkyl and the C₃₋₆ cycloalkyl being independently from each other unsubstituted or substituted by 1 to 4 same or different substituents, the substituents being independently from each other selected from the group consisting of C₁₋₁₀ alkyl, F, Cl, Br, OH, phenyl or NR²¹R²²,
phenyl, C₁₋₆ alkyl-C₆₋₁₂ aryl, the phenyl and the C₁₋₆ alkyl-C₆₋₁₂ aryl being independently from each other unsubstituted or substituted by 1 to 4 same or different substituents, the substituents being independently from each other selected from the group consisting of C₁₋₁₀ alkyl, C₃₋₆ cycloalkyl, OH, NO₂, CN, F, Cl, Br, CF₃, phenyl, C₁₋₁₀ alkoxy and NR²¹R²²;
the R²¹ and R²² residues are same or different and independently from each other selected from the group consisting of H, C₁₋₁₀ alkyl, phenyl and C₁₋₁₂ alkyl-NR²³R²⁴;
the R²³ and R²⁴ residues are same or different and independently from each other selected from the group consisting of H, C₁₋₁₀ alkyl and phenyl;
the R³⁰ residues are same or different and independently from each other selected from the group consisting of OH, C₁₋₆ alkyl, phenyl and O-C₁₋₆ alkyl.

3. A compound of formula (I) according to claim 1 or 2, wherein
M is a divalent metal atom selected from the group consisting of Mn, Cu, Ni, Co, Zn and Fe;
X1, X2, X3, X4, Y1, Y2, Y3 and Y4 are same or different and independently from each other selected from the group consisting of the divalent endocyclic groups C(R4R5), N(R6), C=O and C=S and the trivalent endocyclic group C(R4);
R4 and R5 are same or different and independently from each other selected from the group consisting of H, CN, CF₃, F, Cl, OH, CO-R³⁰,
C₁₋₆ alkyl, the C₁₋₆ alkyl being unsubstituted or substituted by 1 to 4 same or different substituents, the substituents being independently from each other selected from the group consisting of C₁₋₆ alkyl, F, OH, phenyl and NR²¹R²²,
phenyl, the phenyl being unsubstituted or substituted by 1 to 4 same or different substituents, the substituents being independently from each other selected from the group consisting of C₁₋₆ alkyl, OH, NO₂, F, Cl, CF₃, C₁₋₆ alkoxy and NR²¹R²²,
OC₁₋₆ alkyl and NR²¹R²²;
R6 is selected from the group consisting of H, NR²¹R²²,
C₁₋₆ alkyl, C₃₋₆ cycloalkyl, the C₁₋₆ alkyl and the C₃₋₆ cycloalkyl being independently from each other unsubstituted or substituted by 1 to 4 same or different substituents, the substituents being independently from each other selected from the group consisting of C₁₋₆ alkyl, F, OH, phenyl or NR²¹R²²,
phenyl, C₁₋₆ alkyl-phenyl, the phenyl and the C₁₋₆ alkyl-phenyl being independently from each other unsubstituted or substituted by 1 to 4 same or different substituents, the substituents being independently from each other selected from the group consisting of C₁₋₆ alkyl, C₃₋₆ cycloalkyl, OH, NO₂, F, Cl, CF₃, C₁₋₆ alkoxy and NR²¹R²²;
the R²¹ and R²² residues are same or different and independently from each other selected from the group consisting of H, C₁₋₆ alkyl, phenyl and C₁₋₆ alkyl-NR²³R²⁴;
the R²³ and R²⁴ residues are same or different and independently from each other selected from the group consisting of H, C₁₋₆ alkyl and phenyl;
the R³⁰ residues are same or different and independently from each other selected from the group consisting of OH, C₁₋₆ alkyl, phenyl and O-C₁₋₆ alkyl.

4. A process for the preparation of a compound of formula (I) with A in formula (I) being H, as defined in one or more of claims 1 to 3, by an azo coupling reaction of the respective compound of formula (Ia) with the respective compound of formula (Ib); 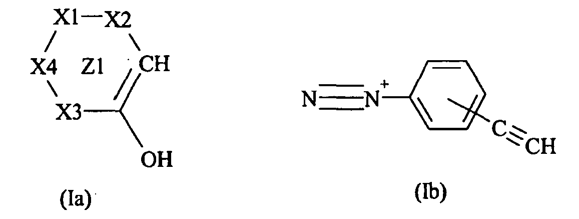 wherein X1, X2, X3, X4 and Z1 are as defined in one or more of claims 1 to 3.

5. A process according to claim 4, wherein the azo coupling reaction is carried out in water, non-aqueous solvents and in mixtures thereof.

6. A process according to claim 4 or 5, wherein the azo coupling reaction is carried out with a stoichiometric ratio of the compound of formula (Ia) to the compound of formula (Ib).

7. A process according to one or more of claims 4 to 6, wherein the azo coupling reaction is done at a temperature of from -30°C to 100°C.

8. A process according to claim 4, wherein the compound of formula (Ib) is prepared by diazotization reaction of a respective compound of formula (Ic).

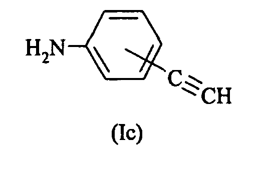

9. A process for the preparation of a compound of formula (I) with A in formula (I) being a group of formula (II), as defined in one or more of claims 1 to 3, by a complexing reaction of a divalent metal salt with a compound of formula (I) with A in formula (I) being H as defined in one or more of claims 1 to 3.

10. A process according to claim 9, wherein the complexing reaction is carried out in suspension or in solution.

11. A process according to claim 9 or 10, wherein the complexing reaction is done at a temperature of from 0°C to 200°C.

12. A process according to one or more of claims 9 to 11, wherein the divalent metal salt is derived from a metal selected from the group consisting of Mg, Ca, Sr, Ba, Mn, Cu, Ni, Co, Zn, and Fe.

13. A process according to one or more of claims 9 to 12, wherein the salt of the divalent metal is preferably a sulfate, halide, perchlorate, acetate or a respective hydrate thereof.

14. A process according to claim 10, wherein the solvent is water, a non-aqueous solvent and a mixture thereof.

15. Use of a compound of formula (I) with A in formula (I) being H, as defined in one or more of claims 1 to 3, as a ligand in azo metal complex dyes.

16. Use of a compound of formula (I) as defined in one or more of claims 1 to 3, in an optical layer.

17. Use of a compound of formula (I) according to claim 16, as a dye in an optical layer.

18. A composition (C) comprising a component (A) and a component (B), wherein the component (A) being a compound of formula (I) as defined in one or more of claims 1 to 3;
and
the component (B) is a compound of formula (X), the compound (X) consisting of a anionic compound of formula (XA) and a cation Cat+; 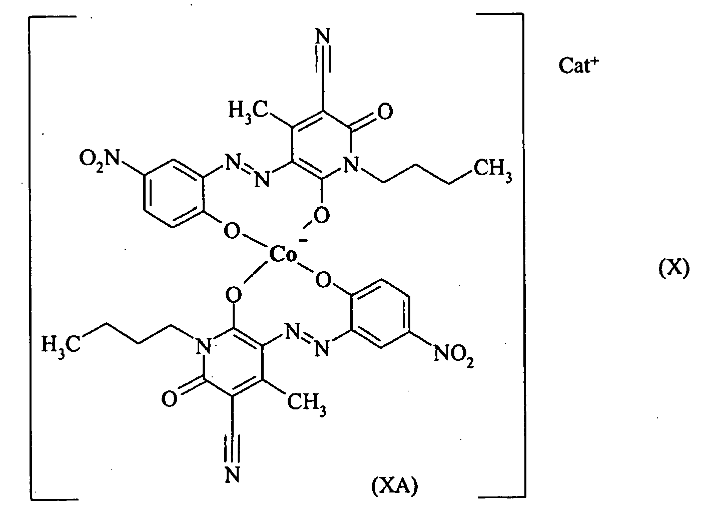 wherein
Cat⁺ is a cation of a Basic Yellow dye.

19. A composition (C) according to claim 18, wherein the component (A) being a compound of formula (I) with A in formula (I) being a group of formula (II) as defined in one or more of claims 1 to 3.

20. A composition (C) according to claim 18 or 19, wherein Cat⁺ is selected from the group of cations consisting of the cations of Basic Yellow 1, Basic Yellow 2, Basic Yellow 11, Basic Yellow 13, Basic Yellow 21, Basic Yellow 24, Basic Yellow 28, Basic Yellow 29, Basic Yellow 37, Basic Yellow 49, Basic Yellow 51, Basic Yellow 57 and Basic Yellow 90.

21. A composition (C) according to one or more of claims 18 to 20, wherein the ratio of the weight of the component (A) to the weight of the component (B) is of from between 0.01 and 0.99 to 0.99 and 0.01.

22. A composition (C) according to one or more of claims 18 to 21, wherein the composition (C) comprises preferably 10 to 100 % by weight, based on the total weight of the composition (C), of the combined amounts of the component (A) and component (B).

23. A process for the preparation of a composition (C) as defined in one or more of the claims 18 to 22, by physically combining the components (A) and (B).

24. Use of the composition (C) as defined in one or more of the claims 18 to 22, in an optical layer.

25. Use of the composition (C) according to claim 24, as a dye in an optical layer.

26. An optical layer comprising at least one compound of formula (I) as defined in one or more of claims 1 to 3.

27. A method for producing an optical layer as defined in claim 26, comprising the following steps
(a) providing a substrate,
(b) dissolving at least one compound of formula (I) as defined in one or more of claims 1 to 3, in an organic solvent to form a solution,
(c) coating the solution (b) on the substrate (a),
(d) evaporating the solvent to form an optical layer.

28. An optical layer according to claim 26, comprising at least one compound of formula (X) as defined in one or more of claims 18 to 20.

29. A method for producing an optical layer as defined in claim 28, comprising the following steps
(a) providing a substrate,
(b) dissolving at least one compound of formula (I), as defined in one or more of claims 1 to 3, and at least one compound of formula (X), as defined in one or more of claims 18 to 20, by
(b1) dissolving a composition (C), as defined in one or more of the claims 18 to 22, in an organic solvent to form a solution, or
(b2a) dissolving at least one compound of formula (I), as defined in one or more of claims 1 to 3, in an organic solvent to form a solution, and
(b2b) dissolving at least one compound of formula (X), as defined in one or more of claims 18 to 20, in an organic solvent to form a solution, or
(b3) dissolving at least one compound of formula (I), as defined in one or more of claims 1 to 3, together with at least one compound of formula (X), as defined in one or more of claims 18 to 20, in an organic solvent to form a solution,
(c) coating the solution or the solutions on the substrate by
(c1) coating the solution (b1) or the solution (b3) on the substrate (a), or
(c2) coating the solution (b2a) on the substrate (a), evaporating the solvent, and coating the solution (b2b) on the substrate (a),
(d) evaporating the solvent to form an optical layer.

30. A method according to claim 27 or 29, wherein the substrate is polycarbonate (PC) or polymethylmethacrylate (PMMA).

31. A method according to one or more of claims 27, 29 and 30, wherein the organic solvent is selected from C₁₋₈ alcohol, halogen substituted C₁₋₈ alcohols, C₁₋₈ ketone, C₁₋₈ ether, halogen substituted C₁₋₄ alkane, nitrile, amide or a mixture thereof.

32. An optical data recording medium comprising an optical layer as defined in claim 26 or 28.

## Patentansprüche

1. Verbindung der Formel (I) 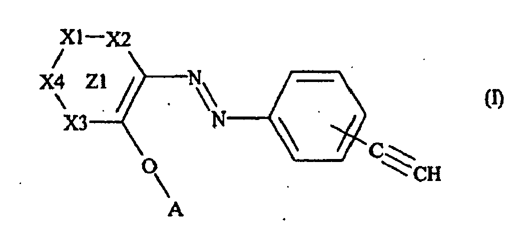 worin der Rest
A für H oder eine Gruppe der Formel (II) 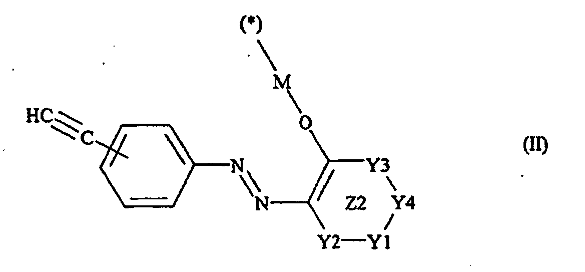 steht;
M für ein zweiwertiges Metallatom steht;
(*) in Formel (II) die Bindung des zweiwertigen Metallatoms M zum O-Atom in Formel (I) darstellt;
X1, X2, X3, X4, Y1, Y2, Y3 und Y4 gleich oder verschieden sind und unabhängig voneinander aus der Gruppe bestehend aus den zweiwertigen endocyclischen Gruppen C(R4R5), N(R6), O, S, C=N-R7, C=O und C=S und den dreiwertigen endocyclischen Gruppen C(R4) und N ausgewählt sind;
R4 und R5 gleich oder verschieden sind und unabhängig voneinander aus der Gruppe bestehend aus H, CN, CF₃, Halogen, NO₂, OH, SH, SO₂-NR²¹R²², CO-R³⁰, SO₂R³⁰, CO-NR²¹R²²,
C₁₋₁₀-Alkyl, C₃₋₁₀₋Cycloalkyl, wobei das C₁₋₁₀-Alkyl und das C₃₋₁₀-Cycloalkyl unabhängig voneinander gegebenenfalls durch 1 bis 4 gleiche oder verschiedene Substituenten substituiert sind, wobei die Substituenten unabhängig voneinander aus der Gruppe bestehend aus C₁₋₁₀-Alkyl, Halogen, OH, C₆-C₁₂-Aryl und NR²¹R²² ausgewählt sind,
C₆-C₁₂-Aryl, wobei das C₆₋₁₂-Aryl gegebenenfalls durch 1 bis 4 gleiche oder verschiedene Substituenten substituiert ist, wobei die Substituenten unabhängig voneinander aus der Gruppe bestehend aus C₁₋₁₀-Alkyl, C₃₋₁₀-Cycloalkyl, OH, NO₂, CN, Halogen, CF₃, C₆₋₁₂-Aryl, C₁₋₁₀-Alkoxy und NR²¹R²² ausgewählt sind, OC₁₋₁₀-Alkyl, NR²¹R²² und SC₁₋₁₀-Alkyl ausgewählt sind;
R6 und R7 gleich oder verschieden sind und unabhängig voneinander aus der Gruppe bestehend aus H, NR²¹R²²,
C₁₋₁₀-Alkyl, C₃₋₁₀-Cycloalkyl, wobei das C₁₋₁₀-Alkyl und das C₃₋₁₀-Cycloalkyl unabhängig voneinander gegebenenfalls durch 1 bis 4 gleiche oder verschiedene Substituenten substituiert sind, wobei die Substituenten unabhängig voneinander aus der Gruppe bestehend aus C₁₋₁₀-Alkyl, Halogen, OH, C₆₋C₁₂-Aryl und NR²¹R²² ausgewählt sind,
C₆₋₁₂-Aryl, C₁₋₆-Alkyl-C₆₋₁₂-aryl, wobei das C₆₋₁₂-Aryl und das C₁₋₆-Alkyl-C₆₋₁₂-aryl unabhängig voneinander gegebenenfalls durch 1 bis 4 gleiche oder verschiedene Substituenten substituiert sind, wobei die Substituenten unabhängig voneinander aus der Gruppe bestehend aus C₁₋₁₀-Alkyl, C₃₋₁₀-Cycloalkyl , OH, NO₂, CN, Halogen, CF₃, C₆₋₁₂-Aryl, C₁₋₁₀-Alkoxy und NR²¹R²² ausgewählt sind,
ausgewählt sind;
die Reste R²¹ und R²² gleich oder verschieden sind und unabhängig voneinander aus der Gruppe bestehend aus H, C₁₋₁₀-Alkyl, C₆₋₁₂-Aryl und C₁₋₁₂-Alkyl-NR²³R²⁴ ausgewählt sind;
die Reste R²³ und R²⁴ gleich oder verschieden sind und unabhängig voneinander aus der Gruppe bestehend aus H, C₁₋₁₀-Alkyl und C₆₋₁₂-Aryl ausgewählt sind;
die Reste R³⁰ gleich oder verschieden sind und unabhängig voneinander aus der Gruppe bestehend aus OH, C₁₋₆-Alkyl , C₆₋₁₀-Aryl und O-C₁₋₆-Alkyl ausgewählt sind;
wobei Z1 in Formel (I) und Z2 in Formel (II) ungesättigte oder aromatische Ringe sind.

2. Verbindung der Formel (I) nach Anspruch 1, worin
M für ein zweiwertiges Metallatom aus der Gruppe bestehend aus Mg, Ca, Sr, Ba, Mn, Cu, Ni, Co, Zn und Fe steht;
X1, X2, X3, X4, Y1, Y2, Y3 und Y4 gleich oder verschieden sind und unabhängig voneinander aus der Gruppe bestehend aus den zweiwertigen endocyclischen Gruppen C(R4R5), N(R6), C=O und C=S und den dreiwertigen endocyclischen Gruppen C(R4) und N ausgewählt sind;
R4 und R5 gleich oder verschieden sind und unabhängig voneinander aus der Gruppe bestehend aus H, CN, CF₃, F, Cl, Br, OH, CO-R³⁰,
C₁₋₁₀-Alkyl, wobei das C₁₋₁₀-Alkyl gegebenenfalls durch 1 bis 4 gleiche oder verschiedene Substituenten substituiert ist, wobei die Substituenten unabhängig voneinander aus der Gruppe bestehend aus C₁₋₁₀-Alkyl, F, Cl, Br, OH, Phenyl und NR²¹R²² ausgewählt sind,
Phenyl, wobei das Phenyl gegebenenfalls durch 1 bis 4 gleiche oder verschiedene Substituenten substituiert ist, wobei die Substituenten unabhängig voneinander aus der Gruppe bestehend aus C₁₋₁₀-Alkyl, OH, NO₂, CN, F, Cl, Br, CF₃, Phenyl, C₁₋₁₀-Alkoxy und NR²¹R²² ausgewählt sind,
OC₁₋₁₀-Alkyl und NR²¹R²² ausgewählt sind;
R6 aus der Gruppe bestehend aus H, NR²¹R²², C₁₋₁₀-Alkyl, C₃₋₆-Cycloalkyl, wobei das C₁₋₁₀-Alkyl und das C₃₋₆-Cycloalkyl unabhängig voneinander gegebenenfalls durch 1 bis 4 gleiche oder verschiedene Substituenten substituiert sind, wobei die Substituenten unabhängig voneinander aus der Gruppe bestehend aus C₁₋₁₀-Alkyl, F, Cl, Br, OH, Phenyl und NR²¹R²² ausgewählt sind,
Phenyl, C₁₋₆-Alkyl-C₆₋₁₂-aryl, wobei das Phenyl und das C₁₋₆-Alkyl-C₆₋₁₂-aryl unabhängig voneinander gegebenenfalls durch 1 bis 4 gleiche oder verschiedene Substituenten substituiert sind, wobei die Substituenten unabhängig voneinander aus der Gruppe bestehend aus C₁₋₁₀-Alkyl, C₃₋₆-Cycloalkyl, OH, NO₂, CN, F, Cl, Br, CF₃, Phenyl, C₁₋₁₀-Alkoxy und NR²¹R²² ausgewählt sind,
ausgewählt ist;
die Reste R²¹ und R²² gleich oder verschieden sind und unabhängig voneinander aus der Gruppe bestehend aus H, C₁₋₁₀-Alkyl, Phenyl und C₁₋₁₂-Alkyl-NR²³R²⁴ ausgewählt sind;
die Reste R²³ und R²⁴ gleich oder verschieden sind und unabhängig voneinander aus der Gruppe bestehend aus H, C₁₋₁₀-Alkyl und Phenyl ausgewählt sind;
die Reste R³⁰ gleich oder verschieden sind und unabhängig voneinander aus der Gruppe bestehend aus OH, C₁₋₆-Alkyl, Phenyl und O-C₁₋₆-Alkyl ausgewählt sind.

3. Verbindung der Formel (I) nach Anspruch 1 oder 2, worin
M für ein zweiwertiges Metallatom aus der Gruppe bestehend aus Mn, Cu, Ni, Co, Zn und Fe steht;
X1, X2 , X3, X4, Y1, Y2, Y3 und Y4 gleich oder verschieden sind und unabhängig voneinander aus der Gruppe bestehend aus den zweiwertigen endocyclischen Gruppen C(R4R5), N(R6), C=O und C=S und der dreiwertigen endocyclischen Gruppe C(R4) ausgewählt sind;
R4 und R5 gleich oder verschieden sind und unabhängig voneinander aus der Gruppe bestehend aus H, CN, CF₃, F, Cl, OH, CO-R³⁰, C₁₋₆-Alkyl, wobei das C₁₋₆-Alkyl gegebenenfalls durch 1 bis 4 gleiche oder verschiedene Substituenten substituiert ist, wobei die Substituenten unabhängig voneinander aus der Gruppe bestehend aus C₁₋₆-Alkyl, F, OH, Phenyl und NR²¹R²² ausgewählt sind,
Phenyl, wobei das Phenyl gegebenenfalls durch 1 bis 4 gleiche oder verschiedene Substituenten substituiert ist, wobei die Substituenten unabhängig voneinander aus der Gruppe bestehend aus C₁₋₆-Alkyl, OH, NO₂, F, Cl, CF₃, C₁₋₆-Alkoxy und NR²¹R²² ausgewählt sind,
OC₁₋₁₀-Alkyl und NR²¹R²² ausgewählt sind;
R6 aus der Gruppe bestehend aus H, NR²¹R²², C₁₋₆-Alkyl, C₃₋₆-Cycloalkyl, wobei das C₁₋₆-Alkyl und das C₃₋₆-Cycloalkyl unabhängig voneinander gegebenenfalls durch 1 bis 4 gleiche oder verschiedene Substituenten substituiert sind, wobei die Substituenten unabhängig voneinander aus der Gruppe bestehend aus C₁₋₆-Alkyl, F, OH, Phenyl und NR²¹R²² ausgewählt sind,
Phenyl, C₁₋₆-Alkylphenyl, wobei das Phenyl und das C₁₋₆-Alkylphenyl unabhängig voneinander gegebenenfalls durch 1 bis 4 gleiche oder verschiedene Substituenten substituiert sind,
wobei die Substituenten unabhängig voneinander aus der Gruppe bestehend aus C₁₋₆-Alkyl, C₃₋₆-Cycloalkyl, OH, NO₂, F, Cl, CF₃, C₁₋₆-Alkoxy und NR²¹R²² ausgewählt sind,
ausgewählt ist;
die Reste R²¹ und R²² gleich oder verschieden sind und unabhängig voneinander aus der Gruppe bestehend aus H, C₁₋₆-Alkyl, Phenyl und C₁₋₆-Alkyl-NR²³R²⁴ ausgewählt sind;
die Reste R²³ und R²⁴ gleich oder verschieden sind und unabhängig voneinander aus der Gruppe bestehend aus H, C₁₋₆-Alkyl und Phenyl ausgewählt sind;
die Reste R³⁰ gleich oder verschieden sind und unabhängig voneinander aus der Gruppe bestehend aus OH, C₁₋₆-Alkyl, Phenyl und O-C₁₋₆-Alkyl ausgewählt sind.

4. Verfahren zur Herstellung einer Verbindung der Formel (I), wobei A in Formel (I) für H steht, gemäß einem oder mehreren der Ansprüche 1 bis 3 durch eine Azokupplungsreaktion der entsprechenden Verbindung der Formel (Ia) mit der entsprechenden Verbindung der Formel (Ib) 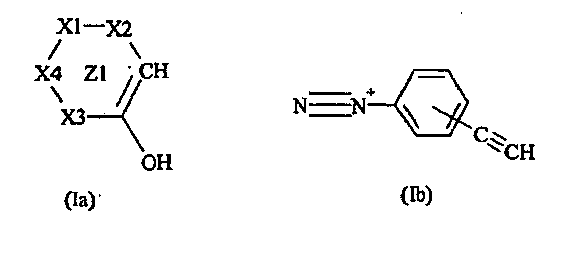 worin X1, X2, X3, X4 und Z1 die in einem oder mehreren der Ansprüche 1 bis 3 angegebene Bedeutung besitzen.

5. Verfahren nach Anspruch 4, bei dem man die Azokupplungsreaktion in Wassser, nichtwäßrigen Lösungsmitteln und Mischungen davon durchführt.

6. Verfahren nach Anspruch 4 oder 5, bei dem man die Azokupplungsreaktion mit einem stöchiometrischen Verhältnis der Verbindung der Formel (Ia) zur Verbindung der Formel (Ib) durchführt.

7. Verfahren nach einem oder mehreren der Ansprüche 4 bis 6, bei dem man die Azokupplungsreaktion bei einer Temperatur von -30°C bis 100°C durchführt.

8. Verfahren nach Anspruch 4, bei dem man die Verbindung der Formel (Ib) durch Diazotierungsreaktion einer entsprechenden Verbindung der Formel (Ic) 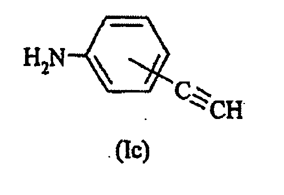 herstellt.

9. Verfahren zur Herstellung einer Verbindung der Formel (I), wobei A in Formel (I) für eine Grupppe der Formel (II) steht, gemäß einem oder mehreren der Ansprüche 1 bis 3 durch eine Komplexierungsreaktion eines Salzes eines zweiwertigen Metalls mit einer Verbindung der Formel (I), wobei A in Formel (I) für H steht, gemäß einem oder mehreren der Ansprüche 1 bis 3.

10. Verfahren nach Anspruch 9, bei dem man die Komplexierungsreaktion in Suspension oder in Lösung durchführt.

11. Verfahren nach Anspruch 9 oder 10, bei dem man die Komplexierungsreaktion bei einer Temperatur von 0°C bis 200°C durchführt.

12. Verfahren nach einem oder mehreren der Ansprüche 9 bis 11, bei dem sich das Salz eines zweiwertigen Metalls von einem Metall aus der Gruppe bestehend aus Mg, Ca, Sr, Ba, Mn, Cu, Ni, Co, Zn und Fe ableitet.

13. Verfahren nach einem oder mehreren der Ansprüche 9 bis 12, bei dem es sich bei dem Salz des zweiwertigen Metalls vorzugsweise um ein Sulfat, Halogenid, Perchlorat, Acetat oder ein entsprechendes Hydrat davon handelt.

14. Verfahren nach Anspruch 10, bei dem es sich bei dem Lösungsmittel um Wasser, ein nichtwäßriges Lösungsmittel und eine Mischung davon handelt.

15. Verwendung einer Verbindung der Formel (I), wobei A in Formel (I) für H steht, gemäß einem oder mehreren der Ansprüche 1 bis 3 als Ligand in Azometallkomplexfarbstoffen.

16. Verwendung einer Verbindung der Formel (I) gemäß einem oder mehreren der Ansprüche 1 bis 3 in einer optischen Schicht.

17. Verwendung einer Verbindung der Formel (I) nach Anspruch 16 als Farbstoff in einer optischen Schicht.

18. Zusammensetzung (C), enthaltend eine Komponente (A) und eine Komponente (B), wobei es sich bei der Komponente (A) um eine Verbindung der Formel (I) gemäß einem oder mehreren der Ansprüche 1 bis 3 handelt
und
es sich bei der Komponente (B) um eine Verbindung der Formel (X) handelt, wobei die Verbindung (X) aus einer anionischen Verbindung der Formel (XA) und einem Kation Cat⁺ besteht; 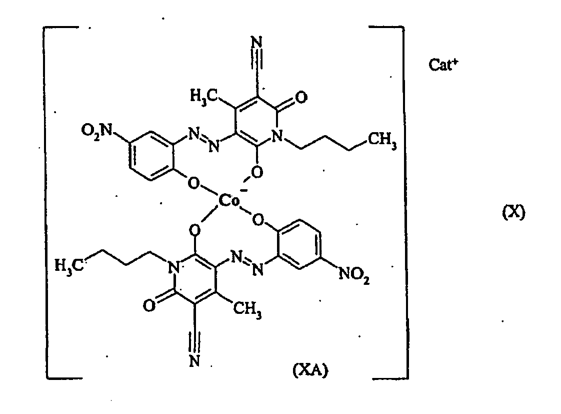 worin
Cat⁺ für ein Kation eines Basic-Yellow-Farbstoffs steht.

19. Zusammensetzung (C) nach Anspruch 18, worin es sich bei der Komponente (A) um eine Verbindung der Formel (I), wobei A in Formel (I) für eine Gruppe der Formel (II) steht, gemäß einem oder mehreren der Ansprüche 1 bis 3 handelt.

20. Zusammensetzung (C) nach Anspruch 18 oder 19, worin Cat⁺ aus der Gruppe von Kationen bestehend aus den Kationen von Basic Yellow 1, Basic Yellow 2, Basic Yellow 11, Basic Yellow 13, Basic Yellow 21, Basic Yellow 24, Basic Yellow 28, Basic Yellow 29, Basic Yellow 37, Basic Yellow 49, Basic Yellow 51, Basic Yellow 57 und Basic Yellow 90 ausgewählt ist.

21. Zusammensetzung (C) nach einem oder mehreren der Ansprüche 18 bis 20, worin das Verhältnis des Gewichts der Komponente (A) zum Gewicht der Komponente (B) zwischen 0,01 und 0,99 bis 0,99 und 0,01 liegt.

22. Zusammensetzung (C) nach einem oder mehreren der Ansprüche 18 bis 21, worin die Zusammensetzung (C) vorzugsweise 10 bis 100 Gew.-%, bezogen auf das Gesamtgewicht der Zusammensetzung (C), der kombinierten Mengen von Komponente (A) und Komponente (B) enthält.

23. Verfahren zur Herstellung einer Zusammensetzung (C) gemäß einem oder mehreren der Ansprüche 18 bis 22 durch physikalisches Kombinieren der Komponenten (A) und (B).

24. Verwendung der Zusammensetzung (C) gemäß einem oder mehreren der Ansprüche 18 bis 22 in einer optischen Schicht.

25. Verwendung der Zusammensetzung (C) nach Anspruch 24 als Farbstoff in einer optischen Schicht.

26. Optische Schicht, enthaltend mindestens eine Verbindung der Formel (I) gemäß einem oder mehreren der Ansprüche 1 bis 3.

27. Verfahren zur Herstellung einer optischen Schicht gemäß Anspruch 26, bei dem man
(a) ein Substrat bereitstellt,
(b) mindestens eine Verbindung der Formel (I) gemäß einem oder mehreren der Ansprüche 1 bis 3 in einem organischen Lösungsmittel löst, wobei man eine Lösung erhält,
(c) die Lösung (b) auf das Substrat (a) aufträgt,
(d) das Lösungsmittel verdampft, wobei man eine optische Schicht erhält.

28. Optische Schicht nach Anspruch 26, die mindestens eine Verbindung der Formel (X) gemäß einem oder mehreren der Ansprüche 18 bis 20 enthält.

29. Verfahren zur Herstellung einer optischen Schicht gemäß Anspruch 28, bei dem man
(a) ein Substrat bereitstellt,
(b) mindestens eine Verbindung der Formel (I) gemäß einem oder mehreren der Ansprüche 1 bis 3 und mindestens eine Verbindung der Formel (X) gemäß einem oder mehreren der Ansprüche 18 bis 20 löst, indem man
(b1) eine Zusammensetzung (C) gemäß einem oder mehreren der Ansprüche 18 bis 22 in einem organischen Lösungsmittel löst, wobei man eine Lösung erhält, oder
(b2a) mindestens eine Verbindung der Formel (I) gemäß einem oder mehreren der Ansprüche 1 bis 3 in einem organischen Lösungsmittel löst, wobei man eine Lösung erhält, und
(b2b) mindestens eine Verbindung der Formel (X) gemäß einem oder mehreren der Ansprüche 18 bis 20 in einem organischen Lösungsmittel löst, wobei man eine Lösung erhält, oder
(b3) mindestens eine Verbindung der Formel (I) gemäß einem oder mehreren der Ansprüche 1 bis 3 zusammen mit mindestens einer Verbindung der Formel (X) gemäß einem oder mehreren der Ansprüche 18 bis 20 in einem organischen Lösungsmittel löst, wobei man eine Lösung erhält,
(c) die Lösung bzw. die Lösungen auf das Substrat aufträgt, indem man
(c1) die Lösung (b1) bzw. die Lösung (b3) auf das Substrat (a) aufträgt oder
(c2) die Lösung (b2a) auf das Substrat (a) aufträgt, das Lösungsmittel verdampft und die Lösung (b2b) auf das Substrat (a) aufträgt,
(d) das Lösungsmittel verdampft, wobei man eine optische Schicht erhält.

30. Verfahren nach Anspruch 27 oder 29, bei dem es sich bei dem Substrat um Polycarbonat (PC) oder Polymethylmethacrylat (PMMA) handelt.

31. Verfahren nach einem oder mehreren der Ansprüche 27, 29 und 30, bei dem man das organische Lösungsmittel unter C₁₋₈-Alkoholen, halogensubstituierten C₁₋₈-Alkoholen, C₁₋₈-Ketonen, C₁₋₈-Ethern, halogensubstituierten C₁₋₄-Alkanen, Nitrilen, Amiden oder einer Mischung davon auswählt.

32. Optisches Datenaufzeichnungsmedium mit einer optischen Schicht gemäß Anspruch 26 oder 28.

## Revendications

1. Composé de formule (I), 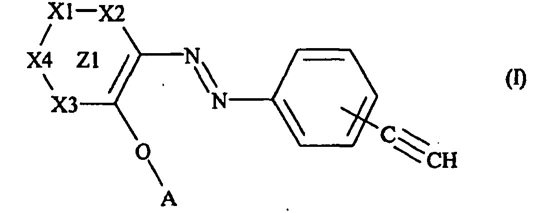 où le résidu
A représente l'atome H ou un groupement de formule (II) ; 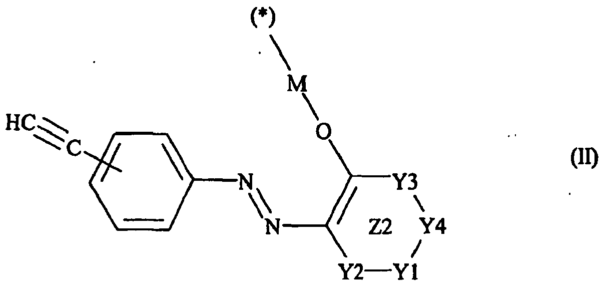
M représente un atome de métal divalent ;
(*) dans la formule (II) désigne la liaison entre l'atome de métal divalent M et l'atome O de la formule (I) ;
X1, X2, X3, X4, Y1, Y2, Y3 et Y4 sont identiques ou différents et sont choisis indépendamment les uns des autres dans le groupe constitué par les groupements endocycliques divalents C(R4R5), N(R6), O, S, C=N-R7, C=O et C=S et les groupements endocycliques trivalents C(R4) et N;
R4 et R5 sont identiques ou différents et sont choisis indépendamment l'un de l'autre dans le groupe constitué par l'atome H et les groupements CN, CF₃, halogéno, NO₂, OH, SH, SO₂-NR²¹R²², CO-R³⁰, SO₂R³⁰, CO-NR²¹R²²,
alkyle en C₁₋₁₀, cycloalkyle en C₃₋₁₀, les groupements alkyle en C₁₋₁₀ et cycloalkyle en C₃₋₁₀ étant éventuellement substitués indépendamment l'un de l'autre par 1 à 4 substituants identiques ou différents, les substituants étant choisis indépendamment les uns des autres dans le groupe constitué par les groupements alkyle en C₁₋₁₀, halogéno, OH, aryle en C₆₋₁₂ et NR²¹R²²,
aryle en C₆-C₁₂, le groupement aryle en C₆₋₁₂ étant éventuellement substitué par 1 à 4 substituants identiques ou différents, les substituants étant choisis indépendamment les uns des autres dans le groupe constitué par les groupements alkyle en C₁₋₁₀, cycloalkyle en C₃₋₁₀, OH, NO₂, CN, halogéno, CF₃, aryle en C₆₋₁₂, alkoxy en C₁₋₁₀ et NR²¹R²²,
O-(alkyle en C₁₋₁₀), NR²¹R²² et S- (alkyle en C₁₋₁₀) ;
R6 et R7 sont identiques ou différents et sont choisis indépendamment l'un de l'autre dans le groupe constitué par l'atome H et les groupements NR²¹R²²,
alkyle en C₁₋₁₀, cycloalkyle en C₃₋₁₀, les groupements alkyle en C₁₋₁₀ et cycloalkyle en C₃₋₁₀ étant éventuellement substitués indépendamment l'un de l'autre par 1 à 4 substituants identiques ou différents, les substituants étant choisis indépendamment les uns des autres dans le groupe constitué par les groupements alkyle en C₁₋₁₀, halogéno, OH, aryle en C₆₋₁₂ et NR²¹R²²,
aryle en C₆₋₁₂, (alkyle en C₁₋₆)-(aryle en C₆₋₁₂), les groupements aryle en C₆₋₁₂ et (alkyle en C₁₋₆)-(aryle en C₆₋₁₂) étant éventuellement substitués indépendamment l'un de l'autre par 1 à 4 substituants identiques ou différents, les substituants étant choisis indépendamment les uns des autres dans le groupe constitué par les groupements alkyle en C₁₋₁₀, cycloalkyle en C₃₋₁₀, OH, NO₂, CN, halogéno, CF₃, aryle en C₆₋₁₂, alkoxy en C₁₋₁₀ et NR²¹R²²;
les résidus R²¹ et R²² sont identiques ou différents et sont choisis indépendamment l'un de l'autre dans le groupe constitué par l'atome H et les groupements alkyle en C₁₋₁₀, aryle en C₆₋₁₂ et (alkyle en C₁₋₁₂)-NR²³R²⁴;
les résidus R²³ et R²⁴ sont identiques ou différents et sont choisis indépendamment l'un de l'autre dans le groupe constitué par l'atome H et les groupements alkyle en C₁₋₁₀ et aryle en C₆₋₁₂;
les résidus R³⁰ sont identiques ou différents et sont choisis indépendamment l'un de l'autre dans le groupe constitué par les groupements OH, alkyle en C₁₋₆, aryle en C₆₋₁₀ et O-(alkyle en C₁₋₆) ;
Z1 dans la formule (I) et Z2 dans la formule (II) étant des cycles insaturés ou aromatiques.

2. Composé de formule (I) conforme à la revendication 1, où
M représente un atome de métal divalent choisi dans le groupe constitué par Mg, Ca, Sr, Ba, Mn, Cu, Ni, Co, Zn et Fe ;
X1, X2, X3, X4, Y1, Y2, Y3 et Y4 sont identiques ou différents et sont choisis indépendamment les uns des autres dans le groupe constitué par les groupements endocycliques divalents C(R4R5), N(R6), C=O et C=S et les groupements endocycliques trivalents C(R4) et N ;
R4 et R5 sont identiques ou différents et sont choisis indépendamment l'un de l'autre dans le groupe constitué par l'atome H et les groupements CN, CF₃, F, Cl, Br, OH, CO-R³⁰,
alkyle en C₁₋₁₀, le groupement alkyle en C₁₋₁₀ étant éventuellement substitué par 1 à 4 substituants identiques ou différents, les substituants étant choisis indépendamment les uns des autres dans le groupe constitué par les groupements alkyle en C₁₋₁₀, F, Cl, Br, OH, phényle et NR²¹R²²,
phényle, le groupement phényle étant éventuellement substitué par 1 à 4 substituants identiques ou différents, les substituants étant choisis indépendamment les uns des autres dans le groupe constitué par les groupements alkyle en C₁₋₁₀, OH, NO₂, CN, F, Cl, Br, CF₃, phényle, alkoxy en C₁₋₁₀ et NR²¹R²², O-(alkyle en C₁₋₁₀) et NR²¹R²²;
R6 est choisi dans le groupe constitué par l'atome H et les groupements NR²¹R²²,
alkyle en C₁₋₁₀, cycloalkyle en C₃₋₆, les groupements alkyle en C₁₋₁₀ et cycloalkyle en C₃₋₆ étant éventuellement substitués indépendamment l'un de l'autre par 1 à 4 substituants identiques ou différents, les substituants étant choisis indépendamment les uns des autres dans le groupe constitué par les groupements alkyle en C₁₋₁₀, F, Cl, Br, OH, phényle ou NR²¹R²²,
phényle, (alkyle en C₁₋₆)-(aryle en C₆₋₁₂), les groupements phényle et (alkyle en C₁₋₆)-(aryle en C₆₋₁₂) étant éventuellement substitués indépendamment l'un de l'autre par 1 à 4 substituants identiques ou différents, les substituants étant choisis indépendamment les uns des autres dans le groupe constitué par les groupements alkyle en C₁₋₁₀, cycloalkyle en C₃₋₆, OH, NO₂ CN, F, Cl, Br, CF₃, phényle, alkoxy en C₁₋₁₀ et NR²¹R²²;
les résidus R²¹ et R²² sont identiques ou différents et sont choisis indépendamment l'un de l'autre dans le groupe constitué par l'atome H et les groupements alkyle en C₁₋₁₀, phényle et (alkyle en C₁₋₁₂) -NR²³R²⁴;
les résidus R²³ et R²⁴ sont identiques ou différents et sont choisis indépendamment l'un de l'autre dans le groupe constitué par l'atome H et les groupements alkyle en C₁₋₁₀ et phényle ;
les résidus R³⁰ sont identiques ou différents et sont choisis indépendamment l'un de l'autre dans le groupe constitué par les groupements OH, alkyle en C₁₋₆, phényle et O-(alkyle en C₁₋₆).

3. Composé de formule (I) conforme à la revendication 1 ou 2, où
M représente un atome de métal divalent choisi dans le groupe constitué par Mn, Cu, Ni, Co, Zn et Fe ;
X1, X2, X3, X4, Y1, Y2, Y3 et Y4 sont identiques ou différents et sont choisis indépendamment les uns des autres dans le groupe constitué par les groupements endocycliques divalents C(R4R5), N(R6), C=O et C=S et le groupement endocyclique trivalent C(R4) ;
R4 et R5 sont identiques ou différents et sont choisis indépendamment l'un de l'autre dans le groupe constitué par l'atome H et les groupements CN, CF₃, F, Cl, OH, CO-R³⁰,
alkyle en C₁₋₆, le groupement alkyle en C₁₋₆ étant éventuellement substitué par 1 à 4 substituants identiques ou différents, les substituants étant choisis indépendamment les uns des autres dans le groupe constitué par les groupements alkyle en C₁₋₆, F, OH, phényle et NR²¹R²²,
phényle, le groupement phényle étant éventuellement substitué par 1 à 4 substituants identiques ou différents, les substituants étant choisis indépendamment les uns des autres dans le groupe constitué par les groupements alkyle en C₁₋₆, OH, NO₂, F, Cl, CF₃, alkoxy en C₁₋₆ et NR²¹R²², O-(alkyle en C₁₋₆) et NR²¹R²²;
R6 est choisi dans le groupe constitué par l'atome H et les groupements NR²¹R²²,
alkyle en C₁₋₆, cycloalkyle en C₃₋₆, les groupements alkyle en C₁₋₆ et cycloalkyle en C₃₋₆ étant éventuellement substitués indépendamment l'un de l'autre par 1 à 4 substituants identiques ou différents, les substituants étant choisis indépendamment les uns des autres dans le groupe constitué par les groupements alkyle en C₁₋₆, F, OH, phényle ou NR²¹R²²,
phényle, (alkyle en C₁₋₆)-phényle, les groupements phényle et (alkyle en C₁₋₆)-phényle étant éventuellement substitués indépendamment l'un de l'autre par 1 à 4 substituants identiques ou différents, les substituants étant choisis indépendamment les uns des autres dans le groupe constitué par les groupements alkyle en C₁₋₆, cycloalkyle en C₃₋₆, OH, NO₂, F, Cl, CF₃, alkoxy en C₁₋₆ et NR²¹R²²;
les résidus R²¹ et R²² sont identiques ou différents et sont choisis indépendamment l'un de l'autre dans le groupe constitué par l'atome H et les groupements alkyle en C₁₋₆, phényle et (alkyle en C₁₋₆)-NR²³R²⁴;
les résidus R²³ et R²⁴ sont identiques ou différents et sont choisis indépendamment l'un de l'autre dans le groupe constitué par l'atome H et les groupements alkyle en C₁₋₆ et phényle ;
les résidus R³⁰ sont identiques ou différents et sont choisis indépendamment l'un de l'autre dans le groupe constitué par les groupements OH, alkyle en C₁₋₆, phényle et O-(alkyle en C₁₋₆).

4. Procédé de synthèse d'un composé de formule (I), A dans la formule (I) représentant l'atome H, conformément à une ou plusieurs des revendications 1 à 3, par une réaction de couplage azo du composé correspondant de formule (Ia) avec le composé correspondant de formule (Ib) ; 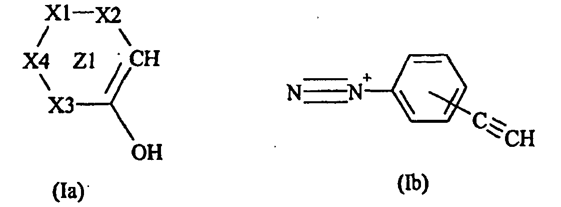 où X1, X2, X3, X4 et Z1 sont tels que définis dans une ou plusieurs des revendications 1 à 3.

5. Procédé conforme à la revendication 4, où la réaction de couplage azo est mise en oeuvre dans l'eau, des solvants non aqueux ou leurs mélanges.

6. Procédé conforme à la revendication 4 ou 5, où la réaction de couplage azo est mise en oeuvre avec une quantité stoechiométrique du composé de formule (Ia) par rapport au composé de formule (Ib).

7. Procédé conforme à une ou plusieurs des revendications 4 à 6, où la réaction de couplage azo est menée à une température comprise entre -30°C et 100 °C.

8. Procédé conforme à la revendication 4, où le composé de formule (Ib) est synthétisé par une réaction de diazotation d'un composé correspondant de formule (Ic).

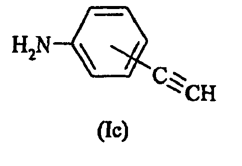

9. Procédé de synthèse d'un composé de formule (I), A dans la formule (I) représentant un groupement de formule (II), conformément à une ou plusieurs des revendications 1 à 3, par une réaction de complexation d'un sel de métal divalent avec un composé de formule (I), A dans la formule (I) représentant l'atome H conformément à une ou plusieurs des revendications 1 à 3.

10. Procédé conforme à la revendication 9, où la réaction de complexation est mise en oeuvre en suspension ou en solution.

11. Procédé conforme à la revendication 9 ou 10, où la réaction de complexation est menée à une température comprise entre 0 °C et 200°C.

12. Procédé conforme à une ou plusieurs des revendications 9 à 11, où le sel de métal divalent est dérivé d'un métal choisi dans le groupe constitué par Mg, Ca, Sr, Ba, Mn, Cu, Ni, Co, Zn et Fe.

13. Procédé conforme à une ou plusieurs des revendications 9 à 12, où le sel de métal divalent est préférentiellement un sulfate, un halogénure, un perchlorate, un acétate ou l'un de leurs hydrates respectifs.

14. Procédé conforme à la revendication 10, où le solvant est l'eau, un solvant non aqueux ou l'un de leurs mélanges.

15. Emploi d'un composé de formule (I), A dans la formule (I) représentant l'atome H, conformément à une ou plusieurs des revendications 1 à 3, en tant que ligand dans des colorants de type complexe azo-métal.

16. Emploi d'un composé de formule (I) conforme à une ou plusieurs des revendications 1 à 3 dans une couche optique.

17. Emploi d'un composé de formule (I) conforme à la revendication 16, en tant que colorant dans une couche optique.

18. Composition (C) comprenant un composant (A) et un composant (B), le composant (A) étant un composé de formule (I) conforme à une ou plusieurs des revendications 1 à 3;
et
le composant (B) étant un composé de formule (X), le composé (X) étant constitué d'un composé anionique de formule (XA) et d'un cation Cat+ ; 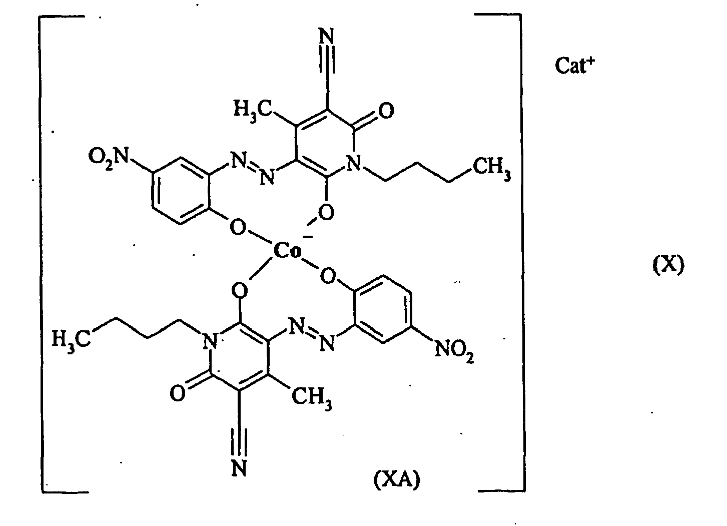 où
Cat⁺ est un cation de colorant Basic Yellow.

19. Composition (C) conforme à la revendication 18, où le composant (A) est un composé de formule (I), A dans la formule (I) représentant un groupement de formule (II) conforme à une ou plusieurs des revendications 1 à 3.

20. Composition (C) conforme à la revendication 18 ou 19, où Cat⁺ est choisi dans le groupe de cations constitué par les cations des colorants Basic Yellow 1, Basic Yellow 2, Basic Yellow 11, Basic Yellow 13, Basic Yellow 21, Basic Yellow 24, Basic Yellow 28, Basic Yellow 29, Basic Yellow 37, Basic Yellow 49, Basic Yellow 51, Basic Yellow 57 et Basic Yellow 90.

21. Composition (C) conforme à une ou plusieurs des revendications 18 à 20, où le rapport de la masse du composant (A) sur celle du composant (B) est compris entre 0,01/0,99 et 0,99/0,01.

22. Composition (C) conforme à une ou plusieurs des revendications 18 à 21, la composition (C) comprenant préférentiellement entre 10 et 100 % en masse, par rapport à la masse totale de la composition (C), de la somme des quantités du composant (A) et du composant (B).

23. Procédé d'élaboration d'une composition (C) conforme à une ou plusieurs des revendications 18 à 22, par combinaison physique des composants (A) et (B).

24. Emploi de la composition (C) conforme à une ou plusieurs des revendications 18 à 22, dans une couche optique.

25. Emploi de la composition (C) conforme à la revendication 24, en tant que colorant dans une couche optique.

26. Couche optique comprenant au moins un composé de formule (I) conforme à une ou plusieurs des revendications 1 à 3.

27. Méthode de production d'une couche optique conforme à la revendication 26, qui comprend les étapes suivantes :
(a) le fait de se munir d'un substrat,
(b) la dissolution d'au moins un composé de formule (I) conforme à une ou plusieurs des revendications 1 à 3 dans un solvant organique pour former une solution,
(c) le fait de revêtir le substrat (a) de la solution (b),
(d) l'évaporation du solvant pour former une couche optique.

28. Couche optique conforme à la revendication 26, comprenant au moins un composé de formule (X) conforme à une ou plusieurs des revendications 18 à 20.

29. Méthode de production d'une couche optique conforme à la revendication 28, qui comprend les étapes suivantes :
(a) le fait de se munir d'un substrat,
(b) la dissolution d'au moins un composé de formule (I), conforme à une ou plusieurs des revendications 1 à 3, et d'au moins un composé de formule (X), conforme à une ou plusieurs des revendications 18 à 20, en
(b1) dissolvant une composition (C), conforme à une ou plusieurs des revendications 18 à 22, dans un solvant organique pour former une solution, ou
(b2a) dissolvant au moins un composé de formule (I) conforme à une ou plusieurs des revendications 1 à 3 dans un solvant organique pour former une solution, et
(b2b) dissolvant au moins un composé de formule (X), conforme à une ou plusieurs des revendications 18 à 20, dans un solvant organique pour former une solution, ou
(b3) dissolvant au moins un composé de formule (I), conforme à une ou plusieurs des revendications 1 à 3, et au moins un composé de formule (X), conforme à une ou plusieurs des revendications 18 à 20, dans un solvant organique pour former une solution,
(c) le revêtement du substrat par la ou les solutions en
(c1) revêtant le substrat avec la solution (b1) ou la solution (b3), ou
(c2) revêtant le substrat (a) avec la solution (b2a), évaporant le solvant et revêtant le substrat (a) avec la solution (b2b),
(d) l'évaporation du solvant pour former une couche optique.

30. Méthode conforme à la revendication 27 ou 29, où le substrat est le polycarbonate (PC) ou le polyméthacrylate de méthyle (PMMA).

31. Méthode conforme à une ou plusieurs des revendications 27, 29 et 30, où le solvant organique est choisi parmi les alcools en C₁₋₈, les alcools halogénés en C₁₋₈, les cétones en C₁₋₈, les éthers en C₁₋₈, les alcanes halogénés en C₁₋₄, les nitriles, les amides ou leurs mélanges.

32. Support optique d'enregistrement de données comprenant une couche optique conforme à la revendication 26 ou 28.
